# EUROPEAN PATENT SPECIFICATION

(11) **EP 3 209 043 B1**
(45) Date of publication and mention of the grant of the patent: **25.03.2020**
(21) Application number: 14905481.9
(22) Date of filing: 04.11.2014
(51) Int. Cl.: H04W 36/28, H04W 36/18, H04W 36/12, H04W 8/08

(54) **MOBILITY MANAGEMENT METHOD, APPARATUS, AND SYSTEM**
MOBILITÄTSVERWALTUNGSVERFAHREN, -VORRICHTUNG UND -SYSTEM
PROCÉDÉ, APPAREIL, ET SYSTÈME DE GESTION DE MOBILITÉ

(43) Date of publication of application: 23.08.2017
(73) Proprietor: Huawei Technologies Co., Ltd., Longgang District Shenzhen, Guangdong 518129 (CN)
(72) Inventor: JIN, Weisheng, Shenzhen Guangdong 518129 (CN)
(74) Representative: Epping - Hermann - Fischer
(86) International application number: PCT/CN2014/090274
(87) International publication number: WO 2016/070333

(56) References cited:
- EP-A1- 2 214 360
- WO-A1-2009/067494
- CN-A- 101 128 022
- CN-A- 103 517 264
- US-A1- 2005 025 132
- US-A1- 2012 258 674
- US-A1- 2014 307 573

## Description

### TECHNICAL FIELD

The present invention relates to the field of communications technologies, and in particular, to a mobility management method, apparatuses, and a system.

### BACKGROUND

Various access technologies, such as a 2G/3G/4G access technology of a cellular network, a WLAN (Wireless Local Area Networks, wireless local area network) access technology, a fiber access technology, and a Bluetooth access technology, are derived from current communications technologies. Multiple access technologies may be integrated into one communications terminal. How to effectively utilize various access technologies in a communications terminal (such as a user terminal) to improve communication efficiency and user experience is one of hot spots of the current technologies.

In technologies implementing multiple access, an MPTCP (Multi-Path Transmission Control Protocol, Multi-Path Transmission Control Protocol) technology is a relatively mature technology, which may distribute data packets, and transmits the data packets between a user terminal and a network by using channels of the multiple access technologies. An MPTCP layer is added between a socket (socket) of a TCP (Transmission Control Protocol, Transmission Control Protocol)/IP (Internet Protocol, Internet Protocol) protocol stack architecture and a TCP layer, and is responsible for managing multiple TCP submodules. Two parties in communication may use different address pairs, and establish TCP substream connections. These TCP substreams may be transmitted in networks of one or more access technologies. The MPTCP layer is responsible for selectively perform data packet division and packeting on a service data stream, path selection, and scheduling. Each substream is associated with and manages multiple TCP substreams, and concurrently transmits data, thereby improving bandwidth utilization and transmission performance. The socket and an application layer do not need to know a specific TCP substream of a transmission service data stream.
In a single-access technology, for example, in a cellular network, when one of two parties in communication moves in the cellular network, if an IP address of the party changes, a TCP connection between the two parties in communication is interrupted. Therefore, in an existing cellular network, to ensure continuity of TCP-based services and avoid interruption of data transmission, an anchor device whose IP address remains unchanged needs to be deployed. With rapid development of the mobile Internet due to rapid popularization of intelligent terminals and mobile applications, mobile networks tend to be deployed in a distributed manner. In addition, mobile Internet communication with a large data volume imposes huge pressure on a data-aggregation-type anchor device in an original mobile network architecture. Once the anchor device goes wrong, normal operation of an entire service network is affected.

US20050025132A1 discloses A wireless communication system comprising: a first base transceiver station (BTS) that is associated with a first packet control function (PCF) and a second BTS that is associated with a second PCF; a packet data serving node (PDSN) having multiple internet protocol (IP) addresses; and a mobile station (MS) that uses the first PCF to establish a first session using a first IP address of the PDSN when in an area being served by the first BTS, the MS using the second PCF to establish a second session with a second IP address of the PDSN when in an area served by the second BTS, and the PDSN treating the handoff between the first IP address and the second IP address as a soft handoff.

EP2214360 A1 discloses a mobile communication method in which a mobile station performs a handover from a handover-source radio base station to a handover-target radio base station, the method comprising the steps of: (A) judging whether or not user plane data to be forwarded to the handover-target radio base station exists for each access bearer set up with an upper level node, when a handover for the mobile station is determined to be performed; (B) notifying, to the handover-target radio base station, a result of the judgment by using a handover request message for the mobile station; (C) setting up a data forwarding tunnel for forwarding user plane data from the handover-source radio base station to the handover-target radio base station only for an access bearer for which the user plane data to be forwarded exists, and notifying, to the handover-source radio base station, setup information on the data forwarding tunnel by using a handover request response message for the handover request message; and (D) forwarding the user plane data to the handover-target radio base station by the handover-source radio base station via the data forwarding tunnel on the basis of the setup information on the data forwarding tunnel.

### SUMMARY

Embodiments of the present invention provide a user equipment and a mobility management method, so as to effectively ensure normal communication between user equipment and a base station without using an anchor device.

To achieve the foregoing objective, the technical solutions as defined in the claims are used in the embodiments of the present invention.

According to a first aspect of an example useful for understanding the invention but not covered by the claims, a mobility management system includes: a first base station, a second base station, a first gateway, a second gateway, and a communication peer end, where the first base station is connected to the first gateway, and the second base station is connected to the second gateway;
the user equipment is configured to establish a first substream to the communication peer end, where the first substream is a substream established by the user equipment to the communication peer end by using a first Internet Protocol IP address, and the first IP address is an IP address allocated by the first gateway to the user equipment;
when the user equipment is handed over from the first base station to the second base station, the user equipment is further configured to obtain a second IP address when the second gateway and the first gateway are not a same gateway, where the second IP address is an IP address allocated by the second gateway to the user equipment;
the user equipment is further configured to establish a second substream to the communication peer end after obtaining the second IP address, where the second substream is a substream established by the user equipment to the communication peer end by using the second IP address;
the communication peer end is configured to cancel the first substream after the second substream is established; and
the first gateway is further configured to release the first IP address after the first substream is canceled.

With reference to the first aspect, in a first possible implementation manner, the user equipment is further configured to: after canceling the first substream, release the first IP address, and send, to the first gateway, an indication message for releasing the first IP address; and
the first gateway is configured to release the first IP address after receiving the indication message that is sent by the user equipment and that is for releasing the first IP address.

With reference to the first aspect, in a second possible implementation manner,
the first base station and the second base station are configured to establish a data forwarding tunnel, where the data forwarding tunnel is a data forwarding channel between the first base station and the second base station; and
the user equipment and the communication peer end are further configured to transmit data of the first substream by using the data forwarding tunnel.

With reference to the second possible implementation manner of the first aspect, in a third possible implementation manner,
the data forwarding tunnel includes:
a downlink data forwarding tunnel or an uplink data forwarding tunnel; or
a downlink data forwarding tunnel and an uplink data forwarding tunnel.

With reference to the second possible implementation manner of the first aspect or the third possible implementation manner of the first aspect, in a fourth possible implementation manner,
the second base station is further configured to delete the data forwarding tunnel after the first substream is canceled.

With reference to the first aspect, in a fifth possible implementation manner,
the obtaining a second IP address when the second gateway and the first gateway are not a same gateway includes:
when the user equipment is connected to the first base station, receiving a first gateway identifier sent by the first base station, where the first gateway identifier is used to indicate the first gateway;
when the user equipment is handed over from the first base station to the second base station, receiving a second gateway identifier sent by the second base station, where the second gateway identifier is used to indicate the second gateway; and
if the second gateway identifier is different from the first gateway identifier, sending, by the user equipment, a request message for obtaining an IP address to the second gateway, and receiving the second IP address sent by the second gateway.

With reference to the first aspect, in a sixth possible implementation manner,
the obtaining a second IP address when the second gateway and the first gateway are not a same gateway includes:
the mobility management system further including a second mobility management entity, where the second mobility management entity is configured to manage the second base station and the second gateway;
when the user equipment is handed over from the first base station to the second base station, sending, by the user equipment, the first IP address or a first gateway identifier to the second mobility management entity, where the first gateway identifier is used to indicate the first gateway;
determining, by the second mobility management entity, whether the first IP address is an IP address allocated by the second gateway to the user equipment, or whether the first gateway identifier is the same as a second gateway identifier, where the second gateway identifier is used to indicate the second gateway; and
if the first IP address is not an IP address allocated by the second gateway to the user equipment, or the first gateway identifier is different from the second gateway identifier, applying, by the second mobility management entity to the second gateway, for allocating an IP address to the user equipment, and sending the second IP address received from the second gateway to the user equipment.

With reference to the first aspect, in a seventh possible implementation manner,
the obtaining a second IP address when the second gateway and the first gateway are not a same gateway includes:
when the user equipment is handed over from the first base station to the second base station, sending, by the user equipment, a second gateway identifier to the first base station, where the second gateway identifier is used to indicate the second gateway;
if the second gateway identifier is different from the first gateway identifier, sending, by the first base station, a determining indication message to the user equipment, where the determining indication message is used to indicate that the second gateway and the first gateway are not a same gateway; and
sending, by the user equipment, a request message for obtaining an IP address to the second gateway after receiving the determining indication message, and receiving the second IP address sent by the second gateway.

With reference to the first aspect, in an eighth possible implementation manner,
the mobility management system further includes a second mobility management entity, where the second mobility management entity is configured to manage the second base station and the second gateway;
the user equipment is further configured to send a location update request message to the second mobility management entity when the user equipment in an idle state moves from the first base station to the second base station; and
the second mobility management entity is configured to send a location update acknowledgement message to the user equipment.

With reference to the first aspect, in a ninth possible implementation manner,
the user equipment in an idle state moves from the first base station to the second base station, and enters the idle state after connecting to the second base station and completing location update;
the mobility management system further includes a first mobility management entity, where the first mobility management entity is configured to manage the first base station and the first gateway;
the first gateway is further configured to send the downlink data notification of the user equipment to the first mobility management entity after the user equipment enters the idle state;
the first mobility management entity is further configured to: receive the downlink data notification of the user equipment from the first gateway, and page the user equipment after receiving the downlink data notification of the user equipment; and
the user equipment is further configured to respond to the paging by the second mobility management entity.

With reference to the ninth possible implementation manner of the first aspect, in a tenth possible implementation manner,
the first gateway is further configured to cache downlink data; and
the first mobility management entity is further configured to: request the downlink data from the first gateway after the user equipment responds to the paging, receive the downlink data sent by the first gateway, and send the downlink data received from the first gateway to the user equipment.

With reference to the ninth possible implementation manner of the first aspect, in a tenth possible implementation manner,
the first gateway is further configured to cache downlink data;
the first mobility management entity is further configured to establish a downlink data forwarding tunnel after the user equipment responds to the paging; and
the first gateway is further configured to send the downlink data to the user equipment by using the downlink data forwarding tunnel.

With reference to the first aspect, in a twelfth possible implementation manner,
the user equipment in an idle state moves from the first base station to the second base station, and enters the idle state after connecting to the second base station and completing location update;
the mobility management system further includes a first mobility management entity and a second mobility management entity, where the first mobility management entity is configured to manage the first base station and the first gateway, and the second mobility management entity is configured to manage the second base station and the second gateway;
the second mobility management entity is further configured to register a downlink data notification of the user equipment with the first mobility management entity;
the first gateway is further configured to send the downlink data notification of the user equipment to the first mobility management entity after the user equipment enters the idle state;
the first mobility management entity is further configured to send the downlink data notification of the user equipment to the second mobility management entity after acknowledging the registration by the second mobility management entity;
the second mobility management entity is further configured to page the user equipment after receiving the downlink data notification of the user equipment; and
the user equipment is further configured to respond to the paging by the second mobility management entity.

With reference to the second possible implementation manner of the eleventh aspect, in a third possible implementation manner,
the first gateway is further configured to cache downlink data;
the second mobility management entity is further configured to request, by using the first mobility management entity, the downlink data after the user equipment responds to the paging;
the first mobility management entity is further configured to forward, to the second mobility management entity, the downlink data sent by the first gateway; and
the second mobility management entity is further configured to send the downlink data to the user equipment.

With reference to the twelfth possible implementation manner of the first aspect, in a fourteenth possible implementation manner,
the first gateway is further configured to cache downlink data;
the second mobility management entity is further configured to establish, by using the first mobility management entity, a downlink data forwarding tunnel after the user equipment responds to the paging; and
the first gateway is further configured to send the downlink data to the user equipment by using the downlink data forwarding tunnel.

With reference to the first aspect, in a fifteenth possible implementation manner,
the mobility management system further includes: a first mobility management entity, an online charging system OCS, and a policy and charging rules function PCRF, where
the first mobility management entity is configured to: obtain an available credit of the user equipment from the online charging system, and send the available credit of the user equipment to the first gateway;
the first mobility management entity is further configured to: obtain a charging rule of the user equipment from the policy and charging rules function, and send the charging rule of the user equipment to the first gateway; and
the first gateway is further configured to: when the user equipment communicates with the communication peer end by using the first substream, perform deduction on the available credit of the user equipment according to the charging rule of the user equipment, and send an available credit balance of the user equipment to the online charging system.

With reference to the first aspect, in a sixteenth possible implementation manner,
the mobility management system further includes: a first mobility management entity and an off-line charging system OFCS, where
the first gateway is further configured to send a call detail record of the user equipment on the first gateway to the first mobility management entity; and
the first mobility management entity is configured to send the call detail record of the user equipment on the first gateway to the off-line charging system.

According to a second aspect, user equipment includes a processor, a memory, and a bus, where the processor and the memory are connected to each other by using the bus, where
the processor is configured to establish a first substream to a communication peer end, where the first substream is a substream established by the user equipment to the communication peer end by using a first Internet Protocol IP address, the first IP address is an IP address allocated by a first gateway to the user equipment, and the first gateway is connected to the user equipment through a first base station;
the processor is further configured to obtain a second IP address, where the second IP address is an IP address allocated by a second gateway to the user equipment, and the second gateway is connected to the user equipment through a second base station;
the processor is further configured to establish a second substream to the communication peer end, where the second substream is a substream established by the user equipment to the communication peer end by using the second IP address; and
the processor is further configured to cancel the first substream after the second substream is established, wherein
the processor is further configured to: after canceling the first substream, release the first IP address, and generate an indication message for instructing the first gateway to release the first IP address; and
the user equipment further includes a transmitter, configured to send, to the first gateway, the indication message for instructing the first gateway to release the first IP address, wherein
the processor is further configured to transmit data of the first substream by using a data forwarding tunnel, where the data forwarding tunnel is a data forwarding channel between the first base station and the second base station.

With reference to the second aspect, in a first possible implementation manner,
the data forwarding tunnel includes:
a downlink data forwarding tunnel or an uplink data forwarding tunnel; or
a downlink data forwarding tunnel and an uplink data forwarding tunnel.

With reference to the second aspect or the first possible implementation manner of the second aspect, in a second possible implementation manner,
the processor is further configured to release the first IP address;
the processor is further configured to generate an indication message indicating that the first substream has been canceled; and
the user equipment further includes a transmitter, configured to send, to the second base station, an indication message indicating that the first substream has been canceled, so that the second base station deletes the data forwarding tunnel.

With reference to the second aspect, in a third possible implementation manner of an example useful for understanding the invention but not covered by the claims,
the user equipment further includes a receiver, where
the receiver is configured to receive a first gateway identifier sent by the first base station, where the first gateway identifier is used to indicate the first gateway;
the receiver is further configured to receive a second gateway identifier sent by the second base station, where the second gateway identifier is used to indicate the second gateway;
the processor is further configured to: determine whether the second gateway identifier is the same as the first gateway identifier, and if the second gateway identifier is different from the first gateway identifier, generate a request message for obtaining an IP address;
the user equipment further includes a transmitter, configured to send the request message for obtaining an IP address to the second gateway; and
the receiver is further configured to receive the second IP address sent by the second gateway.

With reference to the second aspect, in a fourth possible implementation manner of an example useful for understanding the invention but not covered by the claims,
the user equipment further includes a transmitter and a receiver, where
the transmitter is configured to: when the user equipment is handed over from the first base station to the second base station, send the first IP address or a first gateway identifier to a second mobility management entity, so that the second mobility management entity determines, according to the first IP address or the first gateway identifier, whether the second gateway and the first gateway are a same gateway, when the second gateway and the first gateway are not a same gateway, apply, to the second gateway, for allocating an IP address to the user equipment, and send the second IP address received from the second gateway to the user equipment, where the first gateway identifier is used to indicate the first gateway, and the second mobility management entity is configured to manage the second base station and the second gateway; and
the receiver is configured to receive the second IP address sent by the second mobility management entity.

With reference to the second aspect, in a fifth possible implementation manner of an example useful for understanding the invention but not covered by the claims,
the user equipment further includes a transmitter and a receiver, where
the transmitter is configured to send a second gateway identifier to the first base station when the user equipment is handed over from the first base station to the second base station, so that the first base station determines whether the second gateway and the first gateway are a same gateway, where the second gateway identifier is used to indicate the second gateway;
the receiver is configured to receive a determining indication message sent by the first base station, where the determining indication message is used to indicate that the second gateway and the first gateway are not a same gateway;
the processor is further configured to generate a request message for obtaining an IP address;
the transmitter is further configured to send the request message for obtaining an IP address to the second gateway; and
the receiver is further configured to receive the second IP address sent by the second gateway.

With reference to the second aspect, in an sixth possible implementation manner of an example useful for understanding the invention but not covered by the claims,
the processor is further configured to generate a location update request message when the user equipment in an idle state moves from the first base station to the second base station; and
the user equipment further includes a receiver and a transmitter, where
the transmitter is configured to send the location update request message to a second mobility management entity, where the second mobility management entity is configured to manage the second base station and the second gateway; and
the receiver is configured to receive a location update acknowledgement message sent by the second mobility management entity.

With reference to the sixth possible implementation manner of the second aspect, in a seventh possible implementation manner,
the processor is further configured to control the user equipment to enter the idle state;
the receiver is further configured to: when the user equipment is in the idle state, receive paging by a first mobility management entity, where the first mobility management entity is configured to manage the first base station and the first gateway;
the processor is further configured to generate a paging response message;
the transmitter is configured to send the paging response message to the first mobility management entity;
the receiver is further configured to: when the user equipment is in the idle state, receive paging by the second mobility management entity, where the second mobility management entity is configured to manage the second base station and the second gateway; and
the transmitter is configured to send the paging response message to the second mobility management entity.

With reference to the seventh possible implementation manner of the second aspect, in an eighth possible implementation manner,
the receiver is further configured to receive the downlink data.

According to a third aspect of an example useful for understanding the invention but not covered by the claims, a first base station includes a processor, a memory, a transmitter, a receiver, and a bus, where the processor, the memory, the transmitter, and the receiver are connected to each other by using the bus, where
the processor is configured to: when the user equipment is handed over from the first base station to the second base station, and before a second substream is established, generate an establishment request message for a data forwarding tunnel, where the second substream is a substream established by the user equipment to a communication peer end by using a second Internet Protocol IP address, the second IP address is an IP address allocated by a second gateway to the user equipment, the second gateway is connected to the second base station, the data forwarding tunnel is a data forwarding channel between the first base station and the second base station, the data forwarding tunnel includes a downlink data forwarding tunnel or an uplink data forwarding tunnel, or the data forwarding tunnel includes the downlink data forwarding tunnel and the uplink data forwarding tunnel, the data forwarding channel is configured to transmit data of a first substream, the first substream is a substream established, by using a first IP address, by the user equipment to the communication peer end before the user equipment is handed over from the first base station to the second base station, the first IP address is an IP address allocated by a first gateway to the user equipment, and the first gateway is connected to the first base station;
the transmitter is configured to send, to the second base station, the establishment request message for the data forwarding tunnel;
the receiver is configured to receive an establishment acknowledgement message sent by the second base station for the data forwarding tunnel;
the receiver is further configured to receive a deletion request message sent by the second base station for the data forwarding tunnel;
the transmitter is further configured to send, to the second base station, a deletion acknowledgement message for the data forwarding tunnel;
the processor is further configured to: release the data forwarding tunnel, and generate a first IP release indication message; and
the transmitter is further configured to send the first IP release indication message to the first gateway.

With reference to the third aspect, in a first possible implementation manner,
the receiver is further configured to receive a second gateway identifier sent by the user equipment, where the second gateway identifier is used to indicate the second gateway;
the processor is further configured to: determine, according to the second gateway identifier, whether the second gateway and the first gateway are a same gateway, and when the second gateway and the first gateway are not a same gateway, generate a determining indication message, where the determining indication message is used to indicate that the second gateway and the first gateway are not a same gateway; and
the transmitter is further configured to send the determining indication message to the user equipment, so that the user equipment sends a request message for obtaining an IP address to the second gateway, and receives the second IP address sent by the second gateway.

According to a fourth aspect of an example useful for understanding the invention but not covered by the claims, a second base station includes a processor, a memory, a transmitter, a receiver, and a bus, where the processor, the memory, the transmitter, and the receiver are connected to each other by using the bus, where
the receiver is configured to: when the user equipment is handed over from the first base station to the second base station, and before a second substream is established, receive an establishment request message sent by the first base station for a data forwarding tunnel, where the second substream is a substream established by the user equipment to a communication peer end by using a second Internet Protocol IP address, the second IP address is an IP address allocated by a second gateway to the user equipment, the second gateway is connected to the second base station, the data forwarding tunnel is a data forwarding channel between the first base station and the second base station, the data forwarding tunnel includes a downlink data forwarding tunnel or an uplink data forwarding tunnel, or the data forwarding tunnel includes the downlink data forwarding tunnel and the uplink data forwarding tunnel, the data forwarding channel is configured to transmit data of a first substream, the first substream is a substream established, by using a first IP address, by the user equipment to the communication peer end before the user equipment is handed over from the first base station to the second base station, the first IP address is an IP address allocated by a first gateway to the user equipment, and the first gateway is connected to the first base station;
the processor is configured to generate an establishment acknowledgement message for the data forwarding tunnel;
the transmitter is configured to send, to the first base station, the establishment acknowledgement message for the data forwarding tunnel;
the processor is further configured to generate a deletion request message for the data forwarding tunnel after the first substream is canceled;
the transmitter is further configured to send, to the first base station, the deletion request message for the data forwarding tunnel;
the receiver is further configured to receive a deletion acknowledgement message sent by the first base station for the data forwarding tunnel; and
the processor is further configured to release the data forwarding tunnel.

According to a fifth aspect of an example useful for understanding the invention but not covered by the claims, user equipment includes a multipath control unit and a transceiving unit, where
the multipath control unit is configured to establish a first substream to a communication peer end when the user equipment is connected to a first base station, where the first substream is a substream established by the user equipment to the communication peer end by using a first Internet Protocol IP address, the first Internet Protocol IP address is an IP address allocated by a first gateway to the user equipment, and the first gateway is connected to the first base station;
the transceiving unit is configured to obtain a second IP address, where the second IP address is an IP address allocated by the second gateway to the user equipment;
the multipath control unit is further configured to establish a second substream to the communication peer end, where the second substream is a substream established by the user equipment to the communication peer end by using the second IP address; and
the multipath control unit is further configured to cancel the first substream after the second substream is established.

With reference to the fifth aspect, in a first possible implementation manner,
the multipath control unit is further configured to: after canceling the first substream, release the first IP address, and generate an indication message for instructing the first gateway to release the first IP address; and
the transceiving unit is further configured to send, to the first gateway, the indication message for instructing the first gateway to release the first IP address.

With reference to the fifth aspect, in a second possible implementation manner,
the transceiving unit is further configured to transmit data of the first substream by using a data forwarding tunnel, where the data forwarding tunnel is a data forwarding channel between the first base station and the second base station.

With reference to the second possible implementation manner of the fifth aspect, in a third possible implementation manner,
a downlink data forwarding tunnel or an uplink data forwarding tunnel; or
a downlink data forwarding tunnel and an uplink data forwarding tunnel.

With reference to the second possible implementation manner of the fifth aspect or the third possible implementation manner of the fifth aspect, in a fourth possible implementation manner,
the multipath control unit is further configured to release the first IP address;
the multipath control unit is further configured to generate an indication message indicating that the first substream has been canceled; and
the transceiving unit is further configured to send, to the second base station, an indication message indicating that the first substream has been canceled, so that the second base station deletes the data forwarding tunnel.

With reference to the fifth aspect, in a fifth possible implementation manner,
the transceiving unit is further configured to: when the user equipment is connected to the first base station, receive a first gateway identifier sent by the first base station, where the first gateway identifier is used to indicate the first gateway;
the transceiving unit is further configured to: when the user equipment is handed over from the first base station to the second base station, receive a second gateway identifier sent by the second base station, where the second gateway identifier is used to indicate the second gateway;
the multipath control unit is further configured to: determine whether the second gateway identifier is the same as the first gateway identifier, and if the second gateway identifier is different from the first gateway identifier, generate a request message for obtaining an IP address;
the transceiving unit is further configured to send the request message for obtaining an IP address to the second gateway; and
the transceiving unit is further configured to receive the second IP address sent by the second gateway.

With reference to the fifth aspect, in a sixth possible implementation manner,
the transceiving unit is further configured to: when the user equipment is handed over from the first base station to the second base station, send the first IP address or a first gateway identifier to a second mobility management entity, so that the second mobility management entity determines, according to the first IP address or the first gateway identifier, whether the second gateway and the first gateway are a same gateway, when the second gateway and the first gateway are not a same gateway, apply, to the second gateway, for allocating an IP address to the user equipment, and send the second IP address received from the second gateway to the user equipment, where the first gateway identifier is used to indicate the first gateway, and the second mobility management entity is configured to manage the second base station and the second gateway; and
the transceiving unit is further configured to receive the second IP address sent by the second mobility management entity.

With reference to the fifth aspect, in a seventh possible implementation manner,
the transceiving unit is further configured to send a second gateway identifier to the first base station when the user equipment is handed over from the first base station to the second base station, so that the first base station determines whether the second gateway and the first gateway are a same gateway, where the second gateway identifier is used to indicate the second gateway;
the transceiving unit is further configured to receive a determining indication message sent by the first base station, where the determining indication message is used to indicate that the second gateway and the first gateway are not a same gateway;
the multipath control unit is further configured to generate a request message for obtaining an IP address;
the transceiving unit is further configured to send the request message for obtaining an IP address to the second gateway; and
the transceiving unit is further configured to receive the second IP address sent by the second gateway.

With reference to the fifth aspect, in a fifth possible implementation manner,
the user equipment further includes a handover control unit, where
the handover control unit is configured to generate a location update request message when the user equipment in an idle state moves from the first base station to the second base station;
the transceiving unit is further configured to send the location update request message to the second mobility management entity; and
the transceiving unit is further configured to receive a location update acknowledgement message sent by the second mobility management entity, where the second mobility management entity is configured to manage the second base station and the second gateway.

With reference to the fifth aspect, in a fifth possible implementation manner,
the handover control unit is further configured to control the user equipment to enter the idle state;
the transceiving unit is further configured to: when the user equipment is in the idle state, receive paging by a first mobility management entity, where the first mobility management entity is configured to manage the first base station and the first gateway;
the handover control unit is further configured to respond to the paging by the first mobility management entity;
the transceiving unit is further configured to receive downlink data cached and forwarded by the first gateway;
the transceiving unit is further configured to: when the user equipment is in the idle state, receive paging by a second mobility management entity, where the first mobility management entity is configured to manage the first base station and the first gateway; and
the handover control unit is further configured to respond to the paging by the second mobility management entity.

With reference to the ninth possible implementation manner of the second aspect, in a tenth possible implementation manner,
the transceiving unit is further configured to receive the downlink data.

According to a sixth aspect of an example useful for understanding the invention but not covered by the claims, a first base station includes a control unit, a sending unit, and a receiving unit, where
the control unit is configured to: when the user equipment is handed over from the first base station to the second base station, and before a second substream is established, generate an establishment request message for a data forwarding tunnel, where the second substream is a substream established by the user equipment to a communication peer end by using a second Internet Protocol IP address, the second IP address is an IP address allocated by a second gateway to the user equipment, the second gateway is connected to the second base station, the data forwarding tunnel is a data forwarding channel between the first base station and the second base station, the data forwarding tunnel includes a downlink data forwarding tunnel or an uplink data forwarding tunnel, or the data forwarding tunnel includes the downlink data forwarding tunnel and the uplink data forwarding tunnel, the data forwarding channel is configured to transmit data of a first substream, the first substream is a substream established, by using a first IP address, by the user equipment to the communication peer end before the user equipment is handed over from the first base station to the second base station, the first IP address is an IP address allocated by a first gateway to the user equipment, and the first gateway is connected to the first base station;
the sending unit is configured to send, to the second base station, the establishment request message for the data forwarding tunnel;
the receiving unit is configured to receive an establishment acknowledgement message sent by the second base station for the data forwarding tunnel;
the receiving unit is further configured to receive a deletion request message sent by the second base station for the data forwarding tunnel;
the control unit is further configured to generate a deletion acknowledgement message for the data forwarding tunnel;
the sending unit is further configured to send, to the second base station, the deletion acknowledgement message for the data forwarding tunnel;
the control unit is further configured to: release the data forwarding tunnel, and generate a first IP release indication message; and
the sending unit is further configured to send the first IP release indication message to the first gateway.

With reference to the sixth aspect, in a first possible implementation manner,
the receiving unit is further configured to receive a second gateway identifier sent by the user equipment, where the second gateway identifier is used to indicate the second gateway;
the control unit is further configured to: determine, according to the second gateway identifier, whether the second gateway and the first gateway are a same gateway, and when the second gateway and the first gateway are not a same gateway, generate a determining indication message, where the determining indication message is used to indicate that the second gateway and the first gateway are not a same gateway; and
the sending unit is further configured to send the determining indication message to the user equipment, so that the user equipment sends a request message for obtaining an IP address to the second gateway, and receives the second IP address sent by the second gateway.

According to a seventh aspect of an example useful for understanding the invention but not covered by the claims, a second base station includes a control unit, a sending unit, and a receiving unit, where
the receiving unit is configured to: when user equipment is handed over from the first base station to the second base station, and before a second substream is established, receive an establishment request message sent by the first base station for a data forwarding tunnel, where the second substream is a substream established by the user equipment to a communication peer end by using a second Internet Protocol IP address, the second IP address is an IP address allocated by a second gateway to the user equipment, the second gateway is connected to the second base station, the data forwarding tunnel is a data forwarding channel between the first base station and the second base station, the data forwarding tunnel includes a downlink data forwarding tunnel or an uplink data forwarding tunnel, or the data forwarding tunnel includes the downlink data forwarding tunnel and the uplink data forwarding tunnel, the data forwarding channel is configured to transmit data of a first substream, the first substream is a substream established, by using a first IP address, by the user equipment to the communication peer end before the user equipment is handed over from the first base station to the second base station, the first IP address is an IP address allocated by a first gateway to the user equipment, and the first gateway is connected to the first base station;
the control unit is configured to generate an establishment acknowledgement message for the data forwarding tunnel;
the sending unit is configured to send, to the first base station, the establishment acknowledgement message for the data forwarding tunnel;
the control unit is further configured to generate a deletion request message for the data forwarding tunnel after the first substream is canceled;
the sending unit is further configured to send, to the first base station, the deletion request message for the data forwarding tunnel;
the receiving unit is further configured to receive a deletion acknowledgement message sent by the first base station for the data forwarding tunnel; and
the control unit is further configured to release the data forwarding tunnel.

According to an eighth aspect, a mobility management method is provided, where
user equipment establishes a first substream to a communication peer end when the user equipment is connected to a first base station, where the first substream is a substream established by the user equipment to the communication peer end by using a first Internet Protocol IP address, and the first IP address is an IP address allocated by a first gateway to the user equipment, and the first gateway is connected to the user equipment through the first base station;
when the user equipment is handed over from the first base station to a second base station, the user equipment obtains a second IP address when a second gateway and the first gateway are not a same gateway, where the second IP address is an IP address allocated by the second gateway to the user equipment, and the second gateway is connected to the user equipment through the second base station;
the user equipment establishes a second substream to the communication peer end after obtaining the second IP address, where the second substream is a substream established by the user equipment to the communication peer end by using the second IP address;
the communication peer end cancels the first substream after the second substream is established; and
after the canceling the first substream, the user equipment releases the first IP address, and instructs the first gateway to release the first IP address, wherein
that the user equipment is handed over from the first base station to the second base station includes: the user equipment is handed over from the first base station to the second base station in a process in which the user equipment is communicating with the communication peer end; and
when the second gateway and the first gateway are not a same gateway, the method further includes:
   establishing, by the first base station and the second base station, a data forwarding tunnel, where the data forwarding tunnel is a data forwarding channel between the first base station and the second base station; and
   transmitting, by the user equipment and the communication peer end, data of the first substream by using the data forwarding tunnel.

With reference to the eighth aspect, in a first possible implementation manner,
the data forwarding tunnel includes:
a downlink data forwarding tunnel or an uplink data forwarding tunnel; or
a downlink data forwarding tunnel and an uplink data forwarding tunnel.

With reference to the eighth aspect or the first possible implementation manner of the eighth aspect, in a second possible implementation manner,
after the canceling the first substream, the method further includes:
deleting, by the second base station, the data forwarding tunnel.

With reference to the eighth aspect, in a third possible implementation manner of an example useful for understanding the invention but not covered by the claims,
the obtaining, by the user equipment, a second IP address when the second gateway and the first gateway are not a same gateway includes:
when the user equipment is connected to the first base station, receiving a first gateway identifier sent by the first base station, where the first gateway identifier is used to indicate the first gateway;
when the user equipment is handed over from the first base station to the second base station, receiving a second gateway identifier sent by the second base station, where the second gateway identifier is used to indicate the second gateway; and
if the second gateway identifier is different from the first gateway identifier, sending, by the user equipment, a request message for obtaining an IP address to the second gateway, and receiving the second IP address sent by the second gateway.

With reference to the eighth aspect, in a fourth possible implementation manner of an example useful for understanding the invention but not covered by the claims,
the obtaining, by the user equipment, a second IP address when the second gateway and the first gateway are not a same gateway includes:
the mobility management system further including a second mobility management entity;
when the user equipment is handed over from the first base station to the second base station, sending, by the user equipment, the first IP address or a first gateway identifier to the second mobility management entity, where the first gateway identifier is used to indicate the first gateway;
determining, by the second mobility management entity, whether the first IP address is an IP address allocated by the second gateway to the user equipment, or whether the first gateway identifier is the same as a second gateway identifier; and
if the first IP address is not an IP address allocated by the second gateway to the user equipment, or the first gateway identifier is different from the second gateway identifier, applying, by the second mobility management entity to the second gateway, for allocating an IP address to the user equipment, and sending the second IP address received from the second gateway to the user equipment.

With reference to the eighth aspect, in a fifth possible implementation manner of an example useful for understanding the invention but not covered by the claims,
the obtaining, by the user equipment, a second IP address when the second gateway and the first gateway are not a same gateway includes:
when the user equipment is handed over from the first base station to the second base station, sending, by the user equipment, a second gateway identifier to the first base station, where the second gateway identifier is used to indicate the second gateway;
if the second gateway identifier is different from the first gateway identifier, sending, by the first base station, a determining indication message to the user equipment, where the first gateway identifier is used to indicate the first gateway, and the determining indication message is used to indicate that the second gateway and the first gateway are not a same gateway; and
sending, by the user equipment, a request message for obtaining an IP address to the second gateway after receiving the determining indication message, and receiving the second IP address sent by the second gateway.

With reference to the eighth aspect, in a sixth possible implementation manner of an example useful for understanding the invention but not covered by the claims,
that the user equipment is handed over from the first base station to the second base station includes: the user equipment in an idle state moves from the first base station to the second base station, sends a location update request message to a second mobility management entity, and receives a location update acknowledgement message sent by the second mobility management entity, where the second mobility management entity is configured to manage the second base station and the second gateway.

With reference to the eighth aspect, in a seventh possible implementation manner, of an example useful for understanding the invention but not covered by the claims the method further includes:
when the user equipment in an idle state moves from the first base station to the second base station, performing location update, and entering the idle state after a location update acknowledgement message sent by the second base station is received;
sending, by the first gateway, a downlink data notification of the user equipment to the first mobility management entity after the user equipment enters the idle state, where the first mobility management entity is configured to manage the first base station and the first gateway;
receiving, by the first mobility management entity, the downlink data notification of the user equipment from the first gateway, and paging the user equipment after receiving the downlink data notification of the user equipment; and
responding, by the user equipment, to the paging by the first mobility management entity.

With reference to the seventh possible implementation manner of the eighth aspect, in an eighth possible implementation manner,
before the sending, by the first gateway, a downlink data notification of the user equipment to the first mobility management entity after the user equipment enters the idle state, the method further includes:
caching, by the first gateway, downlink data; and
after the responding, by the user equipment, to the paging by the first mobility management entity, the method further includes:
   requesting, by the first mobility management entity, the downlink data from the first gateway after the user equipment responds to the paging, receiving the downlink data sent by the first gateway, and sending the downlink data received from the first gateway to the user equipment.

With reference to the eighth possible implementation manner of the eighth aspect, in a ninth possible implementation manner,
before the sending, by the first gateway, a downlink data notification of the user equipment to the first mobility management entity after the user equipment enters the idle state, the method further includes:
caching, by the first gateway, downlink data; and
after the responding, by the user equipment, to the paging by the first mobility management entity, the method further includes:
   establishing, by the first mobility management entity, a downlink data forwarding tunnel; and
   sending, by the first gateway, the downlink data to the user equipment by using the downlink data forwarding tunnel.

With reference to the eighth aspect, in a tenth possible implementation manner of an example useful for understanding the invention but not covered by the claims,
the user equipment in an idle state moves from the first base station to the second base station, performs location update, and enters the idle state after a location update acknowledgement message sent by the second base station is received;
a second mobility management entity registers a downlink data notification of the user equipment with a first mobility management entity after the user equipment enters the idle state, where the second mobility management entity is configured to manage the second base station and the second gateway, and the first mobility management entity is configured to manage the first base station and the first gateway;
the first mobility management entity sends the downlink data notification of the user equipment to the second mobility management entity after acknowledging the registration by the second mobility management entity;
the second mobility management entity pages the user equipment after receiving the downlink data notification of the user equipment; and
the user equipment responds to the paging by the second mobility management entity.

With reference to the tenth possible implementation manner of the eighth aspect, in an eleventh possible implementation manner,
before the sending, by the first gateway, a downlink data notification of the user equipment to the first mobility management entity after the user equipment enters the idle state, the method further includes:
caching, by the first gateway, downlink data; and
after the responding, by the user equipment, to the paging by the first mobility management entity, the method further includes:
   requesting, by the second mobility management entity, the downlink data by using the first mobility management entity;
   forwarding, by the first mobility management entity to the second mobility management entity, the downlink data sent by the first gateway; and
   sending, by the second mobility management entity, the downlink data to the user equipment.

With reference to the tenth possible implementation manner of the eighth aspect, in a twelfth possible implementation manner,
before the sending, by the first gateway, a downlink data notification of the user equipment to the first mobility management entity after the user equipment enters the idle state, the method further includes:
caching, by the first gateway, downlink data; and
after the responding, by the user equipment, to the paging by the first mobility management entity, the method further includes:
   establishing, by the second mobility management entity, a downlink data forwarding tunnel by using the first mobility management entity; and
   sending, by the first gateway, the downlink data to the user equipment by using the downlink data forwarding tunnel.

With reference to the eighth aspect, in a thirteenth possible implementation manner of an example useful for understanding the invention but not covered by the claims, the method further includes:
obtaining, by the first gateway, a charging rule of the user equipment and an available credit of the user equipment;
performing, by the first gateway, deduction on the available credit of the user equipment according to the charging rule of the user equipment when the user equipment communicates with the communication peer end by using the first substream; and
sending, by the first gateway, an available credit balance of the user equipment to an online charging system.

With reference to the eighth aspect, in a fourteenth possible implementation manner of an example useful for understanding the invention but not covered by the claims, the method further includes:
sending, by the first gateway, a call detail record of the user equipment on the first gateway to the first mobility management entity; and
sending, by the first mobility management entity, the call detail record of the user equipment on the first gateway to an off-line charging system.

According to a ninth aspect of an example useful for understanding the invention but not covered by the claims, a mobility management method is provided, applied to user equipment, where
the user equipment establishes a first substream to a communication peer end when the user equipment is connected to a first base station, where the first substream is a substream established by the user equipment to the communication peer end by using a first Internet Protocol IP address, the first IP address is an IP address allocated by a first gateway to the user equipment, and the first gateway is connected to the first base station;
when the user equipment is handed over from the first base station to the second base station, the user equipment obtains a second IP address when a second gateway and the first gateway are not a same gateway, where the second IP address is an IP address allocated by the second gateway to the user equipment;
the user equipment establishes a second substream to the communication peer end, where the second substream is a substream established by the user equipment to the communication peer end by using the second IP address; and
the user equipment cancels the first substream after the second substream is established.

With reference to the ninth aspect, in a first possible implementation manner,
after the canceling the first substream, the user equipment releases the first IP address, and instructs the first gateway to release the first IP address.

With reference to the ninth aspect, in a second possible implementation manner,
that the user equipment is handed over from the first base station to the second base station includes: the user equipment is handed over from the first base station to the second base station in a process in which the user equipment is communicating with the communication peer end; and
when the second gateway and the first gateway are not a same gateway, the method further includes:
   establishing, by the user equipment, a data forwarding tunnel to the communication peer end, and transmitting data of the first substream by using the data forwarding tunnel, where the data forwarding tunnel is a data forwarding channel between the first base station and the second base station.

With reference to the second possible implementation manner of the ninth aspect, in a third possible implementation manner, the data forwarding tunnel includes:
a downlink data forwarding tunnel or an uplink data forwarding tunnel; or
a downlink data forwarding tunnel and an uplink data forwarding tunnel.

With reference to the second possible implementation manner of the ninth aspect or the third possible implementation manner of the ninth aspect, in a fourth possible implementation manner,
after the canceling the first substream, the method further includes:
releasing, by the user equipment, the first IP address, and instructing the first gateway to release the first IP address; and
indicating, by the user equipment to the second base station, that the first substream has been canceled, so that the second base station deletes the data forwarding tunnel.

With reference to the ninth aspect, in a fifth possible implementation manner,
the obtaining, by the user equipment, a second IP address when a second gateway and the first gateway are not a same gateway includes:
when the user equipment is connected to the first base station, receiving a first gateway identifier sent by the first base station, where the first gateway identifier is used to indicate the first gateway;
when the user equipment is handed over from the first base station to the second base station, receiving a second gateway identifier sent by the second base station, where the second gateway identifier is used to indicate the second gateway; and
if the second gateway identifier is different from the first gateway identifier, sending, by the user equipment, a request message for obtaining an IP address to the second gateway, and receiving the second IP address sent by the second gateway.

With reference to the ninth aspect, in a sixth possible implementation manner,
the obtaining a second IP address when a second gateway and the first gateway are not a same gateway includes:
when the user equipment is handed over from the first base station to the second base station, sending the first IP address or a first gateway identifier to a second mobility management entity, so that the second mobility management entity determines, according to the first IP address or the first gateway identifier, whether the second gateway and the first gateway are a same gateway, when the second gateway and the first gateway are not a same gateway, applying, to the second gateway, for allocating an IP address to the user equipment, and sending the second IP address received from the second gateway to the user equipment, where the first gateway identifier is used to indicate the first gateway, and the second mobility management entity is configured to manage the second base station and the second gateway.

With reference to the ninth aspect, in a seventh possible implementation manner,
the obtaining a second IP address when a second gateway and the first gateway are not a same gateway includes:
sending, by the user equipment, a second gateway identifier to the first base station when the user equipment is handed over from the first base station to the second base station, so that the first base station determines whether the second gateway and the first gateway are a same gateway, where the second gateway identifier is used to indicate the second gateway; and
receiving, by the user equipment, a determining indication message sent by the first base station, sending a request message for obtaining an IP address to the second gateway, and receiving the second IP address sent by the second gateway, where the determining indication message is used to indicate that the second gateway and the first gateway are not a same gateway.

With reference to the ninth aspect, in an eighth possible implementation manner,
that the user equipment is handed over from the first base station to the second base station includes: the user equipment in an idle state moves from the first base station to the second base station, sends a location update request message to a second mobility management entity, and receives a location update acknowledgement message sent by the second mobility management entity, where the second mobility management entity is configured to manage the second base station and the second gateway.

With reference to the eighth possible implementation manner of the ninth aspect, in a ninth possible implementation manner,
after the receiving a location update acknowledgement message sent by the second mobility management entity, the method further includes:
   entering, by the user equipment, the idle state; and
   after the user equipment in the idle state receives paging by a first mobility management entity, responding, by the user equipment, to the paging by the first mobility management entity, and receiving downlink data cached and forwarded by the first gateway, where the first mobility management entity is configured to manage the first base station and the first gateway; or
after the user equipment in the idle state receives paging by a second mobility management entity, responding, by the user equipment, to the paging by the second mobility management entity, and receiving downlink data cached and forwarded by the first gateway, where the first mobility management entity is configured to manage the first base station and the first gateway.

According to a tenth aspect of an example useful for understanding the invention but not covered by the claims, a mobility management method is provided, applied to a first base station, where when the user equipment is handed over from the first base station to the second base station, and before a second substream is established, the first base station sends, to the second base station, an establishment request message for a data forwarding tunnel, and receives an establishment acknowledgement message sent by the second base station for the data forwarding tunnel, where
the second substream is a substream established by the user equipment to a communication peer end by using a second Internet Protocol IP address, the second IP address is an IP address allocated by a second gateway to the user equipment, the second gateway is connected to the second base station, the data forwarding tunnel is a data forwarding channel between the first base station and the second base station, the data forwarding tunnel includes a downlink data forwarding tunnel or an uplink data forwarding tunnel, or the data forwarding tunnel includes the downlink data forwarding tunnel and the uplink data forwarding tunnel, the data forwarding channel is configured to transmit data of a first substream, the first substream is a substream established, by using a first IP address, by the user equipment to the communication peer end before the user equipment is handed over from the first base station to the second base station, the first IP address is an IP address allocated by a first gateway to the user equipment, and the first gateway is connected to the first base station;
after a deletion request message sent by the second base station for the data forwarding tunnel is received, a deletion acknowledgement message for the data forwarding tunnel is sent to the second base station, and the data forwarding tunnel is released; and
after the data forwarding tunnel is released, the first gateway is instructed to release the first IP address.

With reference to the tenth aspect, in a first possible implementation manner,
before the sending, by the first base station to the second base station, an establishment request message for a data forwarding tunnel, the method further includes:
receiving, by the first base station, a second gateway identifier sent by the user equipment, where the second gateway identifier is used to indicate the second gateway;
determining, by the first base station according to the second gateway identifier, whether the second gateway and the first gateway are a same gateway; and
when the second gateway and the first gateway are not a same gateway, sending, by the first base station, a determining indication message to the user equipment, so that the user equipment sends a request message for obtaining an IP address to the second gateway, and receives the second IP address sent by the second gateway, where the determining indication message is used to indicate that the second gateway and the first gateway are not a same gateway.

According to an eleventh aspect of an example useful for understanding the invention but not covered by the claims, a mobility management method is provided, applied to a second base station, where
when the user equipment is handed over from the first base station to the second base station, and before a second substream is established, the second base station receives an establishment request message sent by the first base station for a data forwarding tunnel, and sends, to the first base station, an establishment acknowledgement message for the data forwarding tunnel, where
the second substream is a substream established by the user equipment to a communication peer end by using a second Internet Protocol IP address, the second IP address is an IP address allocated by a second gateway to the user equipment, the second gateway is connected to the second base station, the data forwarding tunnel is a data forwarding channel between the first base station and the second base station, the data forwarding tunnel includes a downlink data forwarding tunnel or an uplink data forwarding tunnel, or the data forwarding tunnel includes the downlink data forwarding tunnel and the uplink data forwarding tunnel, the data forwarding channel is configured to transmit data of a first substream, the first substream is a substream established, by using a first IP address, by the user equipment to the communication peer end before the user equipment is handed over from the first base station to the second base station, the first IP address is an IP address allocated by a first gateway to the user equipment, and the first gateway is connected to the first base station;
after the first substream is canceled, a deletion request message for the data forwarding tunnel is sent to the first base station, and a deletion acknowledgement message sent by the first base station for the data forwarding tunnel is received; and
after the deletion acknowledgement message sent by the first base station for the data forwarding tunnel is received, the data forwarding tunnel is released.

According to the mobility management method, the apparatuses, and the system provided in the embodiments of the present invention or the examples useful for understanding the invention, a first gateway and a second gateway dynamically allocate an IP address to user equipment. In the prior art, a data-aggregation-type anchor device in a mobile network architecture centrally allocates an IP address to user equipment. As a result, the anchor device is under huge pressure. Once the anchor device goes wrong, normal operation of an entire service network is affected, and a service of the user equipment is interrupted. According to the mobility management method, the apparatuses, and the system provided in the embodiments of the present invention or the examples useful for understanding the invention, when the user equipment is handed over from the first gateway to the second gateway, the user equipment and a communication peer end establish a second substream by using a second IP address. Before the second substream is established, the user equipment communicates with the communication peer end by using a first substream. After the second substream is established, the first substream is canceled. In this way, without using an anchor device, normal communication between user equipment and a base station is effectively ensured, and continuity of a service between the user equipment and a communication peer end is also ensured.

### BRIEF DESCRIPTION OF DRAWINGS

To describe the technical solutions in the embodiments of the present invention or in the prior art more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic structural diagram of a mobility management system according to an example useful for understanding the present invention;
FIG. 2 is a schematic structural diagram of user equipment according to an embodiment of the present invention;
FIG. 3 is a schematic structural diagram of a first base station according to an example useful for understanding the present invention;
FIG. 4 is a schematic structural diagram of a second base station according to an example useful for understanding the present invention;
FIG. 5 is a schematic structural diagram of another user equipment according to an example useful for understanding the present invention;
FIG. 6 is a schematic structural diagram of another first base station according to an example useful for understanding the present invention;
FIG. 7 is a schematic structural diagram of another second base station according to an example useful for understanding the present invention; and
FIG. 8 is a schematic flowchart of a mobility management method according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

The embodiments of the present invention are defined by the appended claims. A mobility management method, apparatuses, and a system are provided. Description is provided by using an LTE (Long Term Evolution, Long Term Evolution) cellular network as an example. The LTE cellular network includes: a first base station, a second base station, a first gateway, a second gateway, a first mobility management entity (Mobility Management Entity, MME), a second mobility management entity, user equipment, and a communication peer end. The first base station is connected to the first gateway. The second base station is connected to the second gateway. The first mobility management entity is configured to manage the first base station and the first gateway. The second mobility management entity is configured to manage the second base station and the second gateway. It should be noted that in an actual application scenario, one gateway may be connected to multiple base stations. In an application scenario of the embodiments of the present invention, the first base station is a base station connected to the first gateway, the second base station is a base station connected to the second gateway, and the first gateway and the second gateway are not a same gateway. When the user equipment is connected to the first base station, the first gateway allocates a first IP address to the user equipment, and user equipment establishes a TCP (Transmission Control Protocol the Transmission Control Protocol) connection to the communication peer end by using the first IP address. When the user equipment is handed over from the first base station to the second base station, because the second gateway and the first gateway are not a same gateway, and the first IP address does not belong to a management range of the second gateway, the second gateway needs to allocate a new IP address to the user equipment, and the user equipment establishes communication with the communication peer end by using the new IP address. In the embodiments of the present invention, the IP address allocated by the second gateway to the user equipment is a second IP address. After obtaining the second IP address, the user equipment establishes a TCP connection to the communication peer end by using the second IP address. The TCP connection established by the user equipment to the communication peer end by using the first IP address is a first substream. The TCP connection established by the user equipment to the communication peer end by using the second IP address is a second substream. In the embodiments of the present invention, as an example, the mobility management method, the apparatuses, and the system are described by using an application scenario in which an MPTCP substream is established by using an MPTCP technology.

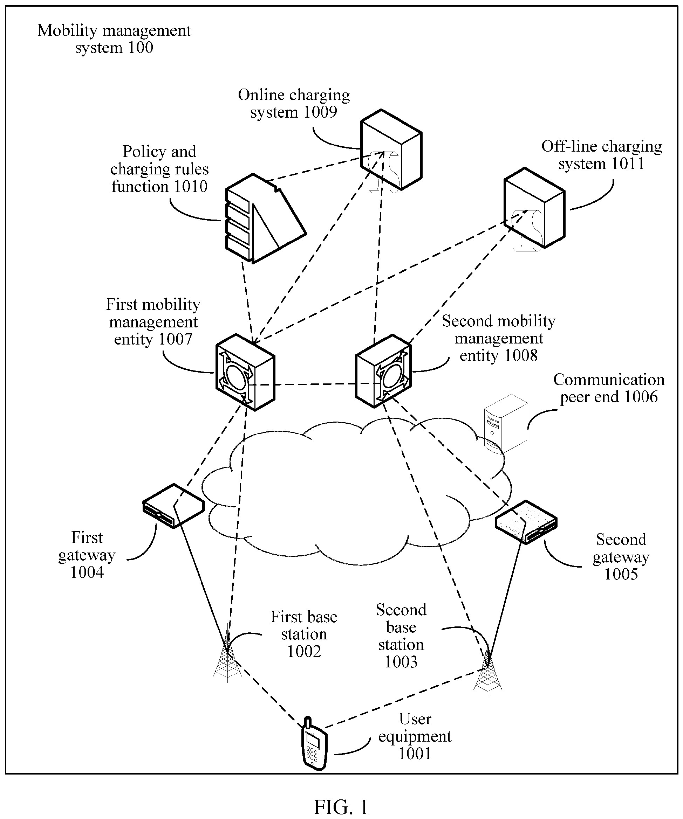

An example useful for understanding the present invention provides a mobility management system 100. Referring to FIG. 1, the mobility management system 100 includes user equipment 1001, a first base station 1002, a second base station 1003, a first gateway 1004, a second gateway 1005, and a communication peer end 1006. The first base station 1002 is connected to the first gateway 1004. The second base station 1003 is connected to the second gateway 1005. Optionally, the mobility management system 100 further includes a first mobility management entity 1007 and a second mobility management entity 1008. The first mobility management entity 1007 is configured to manage the first base station 1002 and the first gateway 1004. The second mobility management entity 1008 is configured to manage the second base station 1003 and the second gateway 1005.

The user equipment 1001 is configured to establish a first MPTCP (Multi-Path Transmission Control Protocol, Multi-Path Transmission Control Protocol) substream to the communication peer end 1006. The first MPTCP substream is an MPTCP substream established by the user equipment 1001 to the communication peer end 1006 by using a first Internet Protocol IP address. The first IP address is an IP address allocated by the first gateway 1004 to the user equipment 1001. Optionally, the communication peer end 1006 may be a server supporting an MPTCP technology, a user terminal, or an MPTCP proxy and a server. The first gateway and the second gateway may be distributed local gateways (local gateway).

When the user equipment 1001 is handed over from the first base station 1002 to the second base station 1003, the user equipment 1001 is further configured to obtain a second IP address when the second gateway 1005 and the first gateway 1004 are not a same gateway. The second IP address is an IP address allocated by the second gateway 1005 to the user equipment 1001.

The user equipment 1001 is further configured to establish a second MPTCP substream to the communication peer end 1006 after obtaining the second IP address. The second MPTCP substream is an MPTCP substream established by user equipment 1001 to the communication peer end 1006 by using the second IP address.

The communication peer end 1006 is configured to cancel the first MPTCP substream after the second MPTCP substream is established.

The first gateway 1004 is further configured to release the first IP address after the first MPTCP substream is canceled. That the first gateway 1004 releases the first IP address means that the first gateway 1004 unbonds the first IP address from the user equipment 1001. After releasing the first IP address, the first gateway 1004 may allocate the first IP address to another user equipment.

A mobility management system in the prior art uses a data-aggregation-type anchor device in a mobile network architecture to centrally allocate an IP address to user equipment. As a result, the anchor device is under huge pressure. Once the anchor device goes wrong, normal operation of an entire service network is affected, and a service of the user equipment is interrupted. According to the mobility management system provided in this example useful for understanding the present invention, the first gateway and the second gateway dynamically allocate an IP address to the user equipment. When the user equipment is handed over from the first gateway to the second gateway, the user equipment and the communication peer end establish, by using an MPTCP technology, a second MPTCP substream by using a second IP address. Before the second MPTCP substream is established, the user equipment communicates with the communication peer end by using a first MPTCP substream. After the second MPTCP substream is established, the first MPTCP substream is canceled. In this way, normal communication between user equipment and a base station is ensured, and continuity of a service between the user equipment and a communication peer end is also ensured.

Optionally, the user equipment 1001 is further configured to: after the first MPTCP substream is canceled, release the first IP address, and send, to the first gateway 1004, an indication message for releasing the first IP address, so that the first gateway 1004 releases the first IP address after receiving the indication message that is sent by the user equipment 1001 and that is for releasing the first IP address. Specifically, optionally, the user equipment 1001 may send, to the first gateway 1004 by using the first base station 1002 or the first mobility management entity 1007, the indication message for releasing the first IP address.

That the user equipment 1001 releases the first IP address means that the user equipment 1001 no longer occupies the first IP address.

Optionally, the first base station 1002 and the second base station 1003 are configured to establish a data forwarding tunnel. The data forwarding tunnel is a data forwarding channel between the first base station 1002 and the second base station 1003.

The user equipment 1001 and the communication peer end 1006 are further configured to transmit data of the first MPTCP substream by using the data forwarding tunnel.

Optionally, the data forwarding tunnel includes a downlink data forwarding tunnel or an uplink data forwarding tunnel. Alternatively, the data forwarding tunnel includes a downlink data forwarding tunnel and an uplink data forwarding tunnel.

Optionally, the second base station 1003 is further configured to delete the data forwarding tunnel after the first MPTCP substream is canceled.

Optionally, the obtaining a second IP address when the second gateway 1005 and the first gateway 1004 are not a same gateway includes:
when the user equipment 1001 is connected to the first base station 1002, receiving a first gateway identifier sent by the first base station 1002, where specifically, a gateway identifier may be a local network (local network) ID, or a gateway identifier may be a local gateway (local gateway) ID;
when the user equipment 1001 is handed over from the first base station 1002 to the second base station 1003, receiving a second gateway identifier sent by the second base station 1003; and
if the second gateway identifier is different from the first gateway identifier, sending, by the user equipment 1001, a request message for obtaining an IP address to the second gateway 1005, and receiving the second IP address sent by the second gateway 1005.

Optionally, the obtaining a second IP address when the second gateway 1005 and the first gateway 1004 are not a same gateway includes:
when the user equipment 1001 is handed over from the first base station 1002 to the second base station 1003, sending, by the user equipment 1001, the first IP address or a first gateway identifier to the second mobility management entity 1008;
determining, by the second mobility management entity 1008, whether the first IP address is an IP address allocated by the second gateway 1005 to the user equipment 1001, or whether the first gateway identifier is the same as a second gateway identifier; and
if the first IP address is not an IP address allocated by the second gateway 1005 to the user equipment 1001, or the first gateway identifier is different from the second gateway identifier, applying, by the second mobility management entity 1008 to the second gateway 1005, for allocating an IP address to the user equipment 1001, and sending the second IP address received from the second gateway 1005 to the user equipment 1001. Further, optionally, when the first gateway 1004 and the second gateway 1005 are managed by a same mobility management entity, the first mobility management entity 1007 and the second mobility management entity 1008 may be a same mobility management entity.

Optionally, the obtaining a second IP address when the second gateway 1005 and the first gateway 1004 are not a same gateway includes:
when the user equipment 1001 is handed over from the first base station 1002 to the second base station 1003, sending, by the user equipment 1001, a second gateway identifier to the first base station 1002;
if the second gateway identifier is different from the first gateway identifier, sending, by the first base station 1002, a determining indication message to the user equipment 1001, where the determining indication message is used to indicate that the second gateway 1005 and the first gateway 1004 are not a same gateway; and
sending, by the user equipment 1001, a request message for obtaining an IP address to the second gateway 1005 after receiving the determining indication message, and receiving the second IP address sent by the second gateway 1005.

Optionally, the user equipment 1001 is further configured to send a location update request message to the second mobility management entity 1008 when the user equipment 1001 in an idle state is handed over from the first base station 1002 to the second base station 1003.

The second mobility management entity 1008 is configured to send a location update acknowledgement message to the user equipment.

Optionally, when the user equipment 1001 in an idle state moves from the first base station to the second base station, the user equipment 1001 enters the idle state after connecting to the second base station 1003 and completing location update.

The first mobility management entity 1006 is further configured to: after the user equipment 1001 enters the idle state, receive a downlink data notification of the user equipment 1001 that is sent by the first gateway 1004.

The first mobility management entity 1006 is further configured to: receive the downlink data notification of the user equipment 1001 from the first gateway 1004, and page the user equipment 1001 after receiving the downlink data notification of the user equipment 1001.

The user equipment 1001 is further configured to respond to the paging by the first mobility management entity 1006.

Optionally, the first gateway 1004 is further configured to cache downlink data.

The first mobility management entity 1006 is further configured to: request the downlink data from the first gateway 1004 after the user equipment 1001 responds to the paging, receive the downlink data sent by the first gateway 1004, and send the downlink data received from the first gateway 1004 to the user equipment 1001.

Optionally, the first mobility management entity 1006 is further configured to establish a downlink data forwarding tunnel after the user equipment 1001 responds to the paging.

The first gateway 1004 is further configured to send the downlink data to the user equipment 1001 by using the downlink data forwarding tunnel.

Optionally, when the user equipment 1001 in an idle state moves from the first base station to the second base station, the user equipment 1001 enters the idle state after connecting to the second base station 1003 and completing location update.

The second mobility management entity 1007 is further configured to register a downlink data notification of the user equipment 1001 with the first mobility management entity 1006.

The first gateway 1004 is further configured to send the downlink data notification of the user equipment 1001 to the first mobility management entity 1006 after the user equipment 1001 enters the idle state.

The first mobility management entity 1006 is further configured to send the downlink data notification of the user equipment 1001 to the second mobility management entity 1007 after acknowledging the registration by the first mobility management entity 1006.

The second mobility management entity 1007 is further configured to page the user equipment 1001 after receiving the downlink data notification of the user equipment 1001.

The user equipment 1001 is further configured to respond to the paging by the second mobility management entity 1007.

The second mobility management entity 1007 is further configured to request, by using the first mobility management entity 1006, the downlink data after the user equipment 1001 responds to the paging.

The first mobility management entity 1006 is further configured to forward, to the second mobility management entity 1007, the downlink data sent by the first gateway 1004.

The second mobility management entity 1007 is further configured to send the downlink data to the user equipment 1001.

Optionally, the second mobility management entity 1007 is further configured to establish, by using the first mobility management entity 1006, a downlink data forwarding tunnel after the user equipment 1001 responds to the paging.

The first gateway 1004 is further configured to send the downlink data to the user equipment 1001 by using the downlink data forwarding tunnel. Optionally, the downlink data forwarding tunnel may be a data forwarding tunnel between the first gateway 1004 and the second gateway 1005. In this case, the first gateway 1004 sends the downlink data to the second gateway 1005 by using the downlink data forwarding tunnel. The second gateway 1005 sends the downlink data to the user equipment 1001 by using the second base station 1003. Alternatively, the downlink data forwarding tunnel may be a data forwarding tunnel between the first gateway 1004 and the second base station 1003. In this case, the first gateway 1004 sends the downlink data to the second base station 1003 by using the data forwarding tunnel. The second base station 1003 sends the downlink data to the user equipment 1001.

Optionally, the mobility management system 100 further includes: an online charging system (OCS, Online Charging System) 1009 and a policy and charging rules function (PCRF, Policy Control and Charging Rule Function) 1010.

The first mobility management entity 1006 is configured to: obtain an available credit of the user equipment 1001 from the online charging system 1009, and send the available credit of the user equipment 1001 to the first gateway 1004.

The first mobility management entity 1006 is further configured to: obtain a charging rule of the user equipment 1001 from the policy and charging rules function 1010, and send the charging rule of the user equipment 1001 to the first gateway 1004.

The first gateway 1004 is further configured to perform deduction on the available credit of the user equipment 1001 according to the charging rule of the user equipment 1001, and send an available credit balance of the user equipment 1001 to the online charging system 1009.

Optionally, the mobility management system 100 further includes an off-line charging system (OFCS, Off-line Charging System) 1011.

The first gateway 1004 is further configured to send a call detail record of the user equipment 1001 on the first gateway 1004 to the first mobility management entity 1006.

The first mobility management entity 1006 is further configured to send the call detail record of the user equipment 1001 on the first gateway 1004 to the off-line charging system 1011.

According to the mobility management system provided in this example useful for understanding the present invention, the first gateway and the second gateway dynamically allocate an IP address to the user equipment. In the prior art, a data-aggregation-type anchor device in a mobile network architecture centrally allocates an IP address to user equipment. Therefore, the anchor device is under huge pressure. Once the anchor device goes wrong, normal operation of an entire service network is affected, and a service of the user equipment is interrupted. According to the mobility management system provided in this example useful for understanding the present invention, when the user equipment is handed over from the first gateway to the second gateway, the user equipment and the communication peer end establish a second MPTCP substream by using a second IP address. Before the second MPTCP substream is established, the user equipment communicates with the communication peer end by using a first MPTCP substream. After the second MPTCP substream is established, the first MPTCP substream is canceled. In this way, normal communication between user equipment and a base station is ensured, and continuity of a service between the user equipment and a communication peer end is ensured.

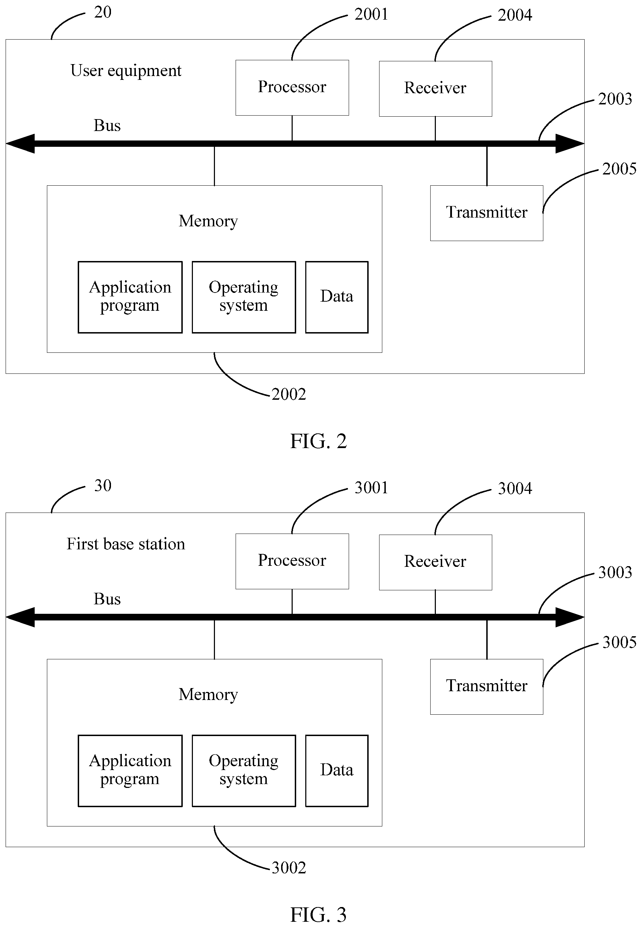

An embodiment of the present invention provides user equipment 20. Referring to FIG. 2, the user equipment 20 includes a processor 2001, a memory 2002, and a bus 2003. The processor 2001 and the memory 2002 are connected to each other by using the bus 2003. Optionally, the user equipment 20 further includes a receiver 2004 and a transmitter 2005. The receiver 2004 and the transmitter 2005, and the processor 2001 and the memory 2002 are connected to each other by using the bus 2003.

The bus 2003 may be an ISA (Industry Standard Architecture, industry standard architecture) bus, a PCI (Peripheral Component, peripheral component interconnect) bus, an EISA (Extended Industry Standard Architecture, extended industry standard architecture) bus, or the like. The bus 2003 may be classified into an address bus, a data bus, a control bus, and the like. For ease of representation, the bus 2003 is represented in FIG. 2 by using only one bold line, but it does not indicate that there is only one bus or only one type of bus.

The memory 2002 is used for application program code for executing the solution of the present invention. The application program code for executing the solution of the present invention is stored in the memory, and is controlled and executed by the processor 2001.

The memory may be a read-only memory ROM or a static storage device of another type that can store static information and an instruction; a random access memory RAM or a dynamic storage device of another type that can store information and an instruction; or an electrically erasable programmable read-only memory EEPROM, a compact disc read-only memory CD-ROM or other optical disk storages, optical disc storages (including a compact disc, a laser disc, an optical disc, a digital versatile disc, a Blu-ray disc, or the like), a disk storage medium or other disk storages, or any other medium that can be used to carry or store expected program code in an instruction or a data structure form and that can be accessed by a computer, but is not limited thereto. These memories are connected to the processor by using the bus.

The processor 2001 may be a central processing unit (Central Processing Unit, CPU for short), or an application-specific integrated circuit (Application Specific Integrated Circuit, ASIC for short), or may be configured into one or more integrated circuits for implementing the embodiments of the present invention.

The processor 2001 is configured to invoke the program code in the memory 2002. In a possible implementation manner, when the foregoing application program is executed by the processor 2001, the following functions are implemented.

The processor 2001 is configured to establish a first Multi-Path Transmission Control Protocol MPTCP substream to a communication peer end. The first MPTCP substream is an MPTCP substream established by the user equipment 20 to the communication peer end by using a first Internet Protocol IP address. The first IP address is an Internet Protocol IP address allocated by a first gateway to the user equipment 20. The first gateway is connected to a first base station.

The processor 2001 is further configured to obtain a second IP address. The second IP address is an IP address allocated by a second gateway to the user equipment 20.

The processor 2001 is further configured to establish a second MPTCP substream to the communication peer end. The second MPTCP substream is an MPTCP substream established by the user equipment 20 to the communication peer end by using the second IP address.

The processor 2001 is further configured to cancel the first MPTCP substream.

When the user equipment provided in this embodiment of the present invention is handed over from a first gateway to a second gateway, the user equipment obtains an IP address, and establishes, by using an MPTCP technology, a second MPTCP substream to a communication peer end by using a second IP address. Before the second MPTCP substream is established, the user equipment communicates with the communication peer end by using a first MPTCP substream. After the second MPTCP substream is established, the first MPTCP substream is canceled. In this way, normal communication between user equipment and a base station is ensured, and continuity of a service between the user equipment and a communication peer end is ensured.

Optionally, the processor 2001 is further configured to: after canceling the first MPTCP substream, release the first IP address, and generate an indication message for releasing the first IP address. The indication message for releasing the first IP address is used to instruct the first gateway to release the first IP address.

The transmitter 2005 is configured to send, to the first gateway, the indication message for releasing the first IP address. Specifically, optionally, the transmitter 2005 may send, to the first gateway by using the first base station or a first mobility management entity, the indication message for releasing the first IP address.

Optionally, the processor 2001 is further configured to transmit data of the first MPTCP substream by using a data forwarding tunnel. The data forwarding tunnel is a data forwarding channel between the first base station and a second base station.

Optionally, the data forwarding tunnel includes a downlink data forwarding tunnel or an uplink data forwarding tunnel. Alternatively, the data forwarding tunnel includes a downlink data forwarding tunnel and an uplink data forwarding tunnel.

Optionally, the processor 2001 is further configured to release the first IP address.

The processor 2001 is further configured to generate an indication message indicating that the first MPTCP substream has been canceled.

The transmitter 2005 is further configured to send, to the second base station, an indication message indicating that the first MPTCP substream has been canceled, so that the second base station deletes the data forwarding tunnel.

Optionally, the receiver 2004 is configured to receive a first gateway identifier sent by the first base station. The first gateway identifier is used to indicate the first gateway.

The receiver 2004 is further configured to receive a second gateway identifier sent by the second base station. The second gateway identifier is used to indicate the second gateway.

The processor 2001 is further configured to: determine whether the second gateway identifier is the same as the first gateway identifier, and if the second gateway identifier is different from the first gateway identifier, generate a request message for obtaining an IP address.

The transmitter 2005 is configured to send the request message for obtaining an IP address to the second gateway.

The receiver 2004 is further configured to receive the second IP address sent by the second gateway.

Optionally, the transmitter 2005 is further configured to: when the user equipment 20 is handed over from the first base station to the second base station, send the first IP address or the first gateway identifier to a second mobility management entity, so that the second mobility management entity determines, according to the first IP address or the first gateway identifier, whether the second gateway and the first gateway are a same gateway, when the second gateway and the first gateway are not a same gateway, apply, to the second gateway, for allocating an IP address to the user equipment 20, and send the second IP address received from the second gateway to the user equipment 20. The second mobility management entity is configured to manage the second base station and the second gateway.

Optionally, the receiver 2004 is further configured to receive the second IP address sent by the second mobility management entity.

Optionally, the transmitter 2005 is further configured to send a second gateway identifier to the first base station when the user equipment 20 is handed over from the first base station to the second base station, so that the first base station determines whether the second gateway and the first gateway are a same gateway.

The receiver 2004 is further configured to receive a determining indication message sent by the first base station. The determining indication message is used to indicate that the second gateway and the first gateway are not a same gateway.

The processor 2001 is further configured to generate a request message for obtaining an IP address.

The transmitter 2005 is further configured to send the request message for obtaining an IP address to the second gateway.

The receiver 2004 is further configured to receive the second IP address sent by the second gateway.

Optionally, the processor 2001 is further configured to generate a location update request message when the user equipment 20 in an idle state moves from the first base station to the second base station.

The transmitter 2005 is further configured to send the location update request message to a second mobility management entity. The second mobility management entity is configured to manage the second base station and the second gateway.

The receiver 2004 is further configured to receive a location update acknowledgement message sent by the second mobility management entity.

Optionally, the processor 2001 is further configured to control the user equipment 20 to enter the idle state.

The receiver 2004 is further configured to: when the user equipment 20 is in the idle state, receive paging by a first mobility management entity. The first mobility management entity is configured to manage the first base station and the first gateway.

The processor 2001 is further configured to generate a paging response message.

The transmitter 2005 is further configured to send the paging response message to the first mobility management entity.

The receiver 2004 is further configured to receive downlink data cached and forwarded by the first gateway.

The receiver 2004 is further configured to: when the user equipment 20 is in the idle state, receive paging by the second mobility management entity. The first mobility management entity is configured to manage the first base station and the first gateway.

The transmitter 2005 is further configured to send the paging response message to the second mobility management entity.

Optionally, the transmitter 2005 is further configured to receive the downlink data.

When the user equipment provided in this embodiment of the present invention is handed over from a first gateway to a second gateway, the user equipment obtains an IP address, and establishes, by using an MPTCP technology, a second MPTCP substream to a communication peer end by using a second IP address. Before the second MPTCP substream is established, the user equipment communicates with the communication peer end by using a first MPTCP substream. After the second MPTCP substream is established, the first MPTCP substream is canceled. In this way, normal communication between user equipment and a base station is ensured, and continuity of a service between the user equipment and a communication peer end is ensured.

An example useful for understanding the present invention provides a first base station 30. Referring to FIG. 3, the first base station 30 includes a processor 3001, a memory 3002, and a bus 3003. The processor 3001, the memory 3002, a receiver 3004, and a transmitter 3005 are connected to each other by using the bus 3003.

The bus 3003 may be an ISA (Industry Standard Architecture, industry standard architecture) bus, a PCI (Peripheral Component, peripheral component interconnect) bus, an EISA (Extended Industry Standard Architecture, extended industry standard architecture) bus, or the like. The bus 3003 may be classified into an address bus, a data bus, a control bus, and the like. For ease of representation, the bus 3003 is represented in FIG. 2 by using only one bold line, but it does not indicate that there is only one bus or only one type of bus.

The memory 3002 is used for application program code for executing the solution of the example useful for understanding the present invention. The application program code for executing the solution of the example useful for understanding the present invention is stored in the memory, and is controlled and executed by the processor 3001.

The memory may be a read-only memory ROM or a static storage device of another type that can store static information and an instruction; a random access memory RAM or a dynamic storage device of another type that can store information and an instruction; or an electrically erasable programmable read-only memory EEPROM, a compact disc read-only memory CD-ROM or other optical disk storages, optical disc storages (including a compact disc, a laser disc, an optical disc, a digital versatile disc, a Blu-ray disc, or the like), a disk storage medium or other disk storages, or any other medium that can be used to carry or store expected program code in an instruction or a data structure form and that can be accessed by a computer, but is not limited thereto. These memories are connected to the processor by using the bus.

The processor 3001 may be a central processing unit (Central Processing Unit, CPU for short), or an application specific integrated circuit (Application Specific Integrated Circuit, ASIC for short), or may be configured into one or more integrated circuits for implementing the examples useful for understanding the present invention.

The processor 3001 is configured to invoke the program code in the memory 3002. In a possible implementation manner, when the foregoing application program is executed by the processor 3001, the following functions are implemented.

The processor 3001 is configured to: when user equipment is handed over from the first base station 30 to a second base station, before a second Multi-Path Transmission Control Protocol MPTCP substream is established, generate an establishment request message for a data forwarding tunnel. The second MPTCP substream is an MPTCP substream established by the user equipment to a communication peer end by using a second Internet Protocol IP address. The second IP address is an IP address allocated by a second gateway to the user equipment. The second gateway is connected to the second base station. The data forwarding tunnel is a data forwarding channel between the first base station 30 and the second base station. The data forwarding tunnel includes a downlink data forwarding tunnel or an uplink data forwarding tunnel, or the data forwarding tunnel includes a downlink data forwarding tunnel and an uplink data forwarding tunnel. The data forwarding channel is configured to transmit data of a first MPTCP substream. The first MPTCP substream is an MPTCP substream established, by using a first IP address, by the user equipment to the communication peer end before the user equipment is handed over from the first base station 30 to the second base station. The first IP address is an IP address allocated by a first gateway to the user equipment. The first gateway is connected to the first base station 30.

The transmitter 3005 is configured to send, to the second base station, the establishment request message for the data forwarding tunnel.

The receiver 3004 is configured to receive an establishment acknowledgement message sent by the second base station for the data forwarding tunnel.

The receiver 3004 is further configured to receive a deletion request message sent by the second base station for the data forwarding tunnel.

The transmitter 3005 is further configured to send, to the second base station, a deletion acknowledgement message for the data forwarding tunnel.

The processor 3001 is further configured to: release the data forwarding tunnel, and generate a first IP release indication message.

The transmitter 3005 is further configured to send the first IP release indication message to the first gateway.

Optionally, the receiver 3004 is further configured to receive a second gateway identifier sent by the user equipment.

The processor 3001 is further configured to: determine, according to the second gateway identifier, whether the second gateway and the first gateway are a same gateway, and when the second gateway and the first gateway are not a same gateway, generate a determining indication message. The determining indication message is used to indicate that the second gateway and the first gateway are not a same gateway.

The transmitter 3005 is further configured to send the determining indication message to the user equipment, so that the user equipment sends a request message for obtaining an IP address to the second gateway, and receives the second IP address sent by the second gateway.

When user equipment is handed over from a first gateway to a second gateway, the first base station provided in this example useful for understanding the present invention determines that the first gateway and the second gateway are not a same gateway, and before a second MPTCP substream is established, establishes a data forwarding tunnel to a second base station, for transmitting data of a first MPTCP substream, thereby ensuring normal communication between user equipment and a base station, and also ensuring continuity of a service between the user equipment and a communication peer end.

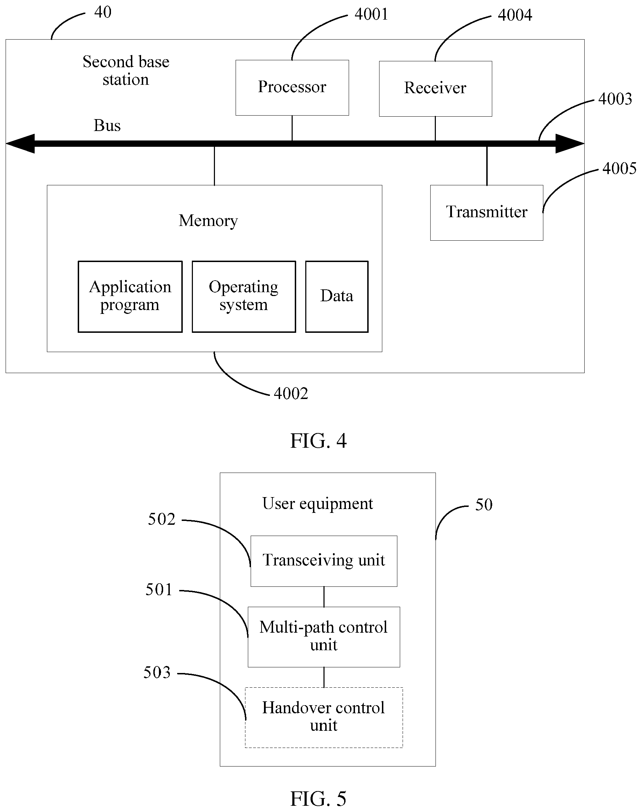

An example useful for understanding the present invention provides a second base station 40. Referring to FIG. 4, the second base station 40 includes a processor 4001, a memory 4002, and a bus 4003. The processor 4001, the memory 4002, a receiver 4004, and a transmitter 4005 are connected to each other by using the bus 4003.

The bus 4003 may be an ISA (Industry Standard Architecture, industry standard architecture) bus, a PCI (Peripheral Component, peripheral component interconnect) bus, an EISA (Extended Industry Standard Architecture, extended industry standard architecture) bus, or the like. The bus 4003 may be classified into an address bus, a data bus, a control bus, and the like. For ease of representation, the bus4003 is represented in FIG. 2 by using only one bold line, but it does not indicate that there is only one bus or only one type of bus.

The memory 4002 is used for application program code for executing the solution of the example useful for understanding the present invention. The application program code for executing the solution of the example useful for understanding the present invention is stored in the memory, and is controlled and executed by the processor 4001.

The memory may be a read-only memory ROM or a static storage device of another type that can store static information and an instruction; a random access memory RAM or a dynamic storage device of another type that can store information and an instruction; or an electrically erasable programmable read-only memory EEPROM, a compact disc read-only memory CD-ROM or other optical disk storages, optical disc storages (including a compact disc, a laser disc, an optical disc, a digital versatile disc, a Blu-ray disc, or the like), a disk storage medium or other disk storages, or any other medium that can be used to carry or store expected program code in an instruction or a data structure form and that can be accessed by a computer, but is not limited thereto. These memories are connected to the processor by using the bus.

The processor 4001 may be a central processing unit (Central Processing Unit, CPU for short), or an application specific integrated circuit (Application Specific Integrated Circuit, ASIC for short), or may be configured into one or more integrated circuits for implementing the examples useful for understanding the present invention.

The processor 4001 is configured to invoke the program code in the memory 4002. In a possible implementation manner, when the foregoing application program is executed by the processor 4001, the following functions are implemented.

The receiver 4004 is configured to: when user equipment is handed over from a first base station to the second base station 40, and before a second Multi-Path Transmission Control Protocol MPTCP substream is established, receive an establishment request message sent by the first base station for a data forwarding tunnel. The second MPTCP substream is an MPTCP substream established by the user equipment to a communication peer end by using a second Internet Protocol IP address. The second IP address is an IP address allocated by a second gateway to the user equipment. The second gateway is connected to the second base station 40. The data forwarding tunnel is a data forwarding channel between the first base station and the second base station 40. The data forwarding tunnel includes a downlink data forwarding tunnel or an uplink data forwarding tunnel, or the data forwarding tunnel includes a downlink data forwarding tunnel and an uplink data forwarding tunnel. The data forwarding channel is configured to transmit data of a first MPTCP substream. The first MPTCP substream is an MPTCP substream established, by using a first IP address, by the user equipment to the communication peer end before the user equipment is handed over from the first base station to the second base station 40. The first IP address is an IP address allocated by a first gateway to the user equipment. The first gateway is connected to the first base station.

The processor 4001 is configured to generate an establishment acknowledgement message for the data forwarding tunnel.

The transmitter 4005 is configured to send, to the first base station, the establishment acknowledgement message for the data forwarding tunnel.

The processor 4001 is further configured to generate a deletion request message for the data forwarding tunnel after the first MPTCP substream is canceled.

The transmitter 4005 is further configured to send, to the first base station, the deletion request message for the data forwarding tunnel.

The receiver 4004 is further configured to receive a deletion acknowledgement message sent by the first base station for the data forwarding tunnel.

The processor 4001 is further configured to release the data forwarding tunnel.

When user equipment is handed over from a first gateway to a second gateway, and before a second MPTCP substream is established, the second base station provided in this example useful for understanding the present invention establishes a data forwarding tunnel to a first base station, for transmitting data of a first MPTCP substream, thereby ensuring normal communication between user equipment and a base station, and also ensuring continuity of a service between the user equipment and a communication peer end.

An example useful for understanding the present invention provides another user equipment 50. Referring to FIG. 5, the user equipment 50 includes a multipath control unit 501 and a transceiving unit 502.

The multipath control unit 501 is configured to establish a first Multi-Path Transmission Control Protocol MPTCP substream to a communication peer end when the user equipment 50 is connected to a first base station. The first MPTCP substream is an MPTCP substream established by the user equipment 50 to the communication peer end by using a first Internet Protocol IP address. The first Internet Protocol IP address is an IP address allocated by a first gateway to the user equipment 50. The first gateway is connected to the first base station.

The transceiving unit 502 is configured to obtain a second IP address. The second IP address is an IP address allocated by a second gateway to the user equipment 50.

The multipath control unit 501 is further configured to establish a second MPTCP substream to the communication peer end. The second MPTCP substream is an MPTCP substream established by the user equipment 50 to the communication peer end by using the second IP address.

The multipath control unit 501 is further configured to cancel the first MPTCP substream after the second MPTCP substream is established.

Optionally, the multipath control unit 501 is further configured to: after canceling the first substream, release the first IP address, and generate an indication message for releasing the first IP address. The indication message for releasing the first IP address is used to instruct the first gateway to release the first IP address.

The transceiving unit 502 is further configured to send, to the first gateway, the indication message for releasing the first IP address.

Optionally, the transceiving unit 502 is further configured to transmit data of the first MPTCP substream by using a data forwarding tunnel. The data forwarding tunnel is a data forwarding channel between the first base station and a second base station.

Optionally, the data forwarding tunnel includes a downlink data forwarding tunnel or an uplink data forwarding tunnel. Alternatively, the data forwarding tunnel includes a downlink data forwarding tunnel and an uplink data forwarding tunnel.

Optionally, the multipath control unit 501 is further configured to release the first IP address.

The multipath control unit 501 is further configured to generate an indication message indicating that the first MPTCP substream has been canceled.

The transceiving unit 502 is further configured to send, to the second base station, an indication message indicating that the first MPTCP substream has been canceled, so that the second base station deletes the data forwarding tunnel.

Optionally, the transceiving unit 502 is further configured to: when the user equipment 50 is connected to the first base station, receive a first gateway identifier sent by the first base station.

The transceiving unit 502 is further configured to: when the user equipment 50 is handed over from the first base station to the second base station, receive a second gateway identifier sent by the second base station.

The multipath control unit 501 is further configured to: determine whether the second gateway identifier is the same as the first gateway identifier, and if the second gateway identifier is different from the first gateway identifier, generate a request message for obtaining an IP address.

The transceiving unit 502 is further configured to send the request message for obtaining an IP address to the second gateway.

The transceiving unit 502 is further configured to receive the second IP address sent by the second gateway.

Optionally, the transceiving unit 502 is further configured to: when the user equipment 50 is handed over from the first base station to the second base station, send the first IP address or the first gateway identifier to a second mobility management entity, so that the second mobility management entity determines, according to the first IP address or the first gateway identifier, whether the second gateway and the first gateway are a same gateway, when the second gateway and the first gateway are not a same gateway, apply, to the second gateway, for allocating an IP address to the user equipment 50, and send the second IP address received from the second gateway to the user equipment 50. The second mobility management entity is configured to manage the second base station and the second gateway.

The transceiving unit 502 is further configured to receive the second IP address sent by the second mobility management entity.

Optionally, the transceiving unit 502 is further configured to send a second gateway identifier to the first base station when the user equipment 50 is handed over from the first base station to the second base station, so that the first base station determines whether the second gateway and the first gateway are a same gateway.

The transceiving unit 502 is further configured to receive a determining indication message sent by the first base station. The determining indication message is used to indicate that the second gateway and the first gateway are not a same gateway.

The multipath control unit 501 is further configured to generate a request message for obtaining an IP address.

The transceiving unit 502 is further configured to send the request message for obtaining an IP address to the second gateway.

The transceiving unit 502 is further configured to receive the second IP address sent by the second gateway.

Optionally, the user equipment 50 further includes a handover control unit 503, configured to generate a location update request message when the user equipment 50 in an idle state moves from the first base station to the second base station.

The transceiving unit 502 is further configured to send the location update request message to the second mobility management entity.

The transceiving unit 502 is further configured to receive a location update acknowledgement message sent by the second mobility management entity. The second mobility management entity is configured to manage the second base station and the second gateway.

Optionally, the multipath control unit 501 is further configured to control the user equipment 50 to enter the idle state.

The transceiving unit 502 is further configured to: when the user equipment 50 is in the idle state, receive paging by a first mobility management entity. The first mobility management entity is configured to manage the first base station and the first gateway.

The handover control unit 503 is further configured to respond to the paging by the first mobility management entity.

The transceiving unit 502 is further configured to receive downlink data cached and forwarded by the first gateway.

The transceiving unit 502 is further configured to: when the user equipment 50 is in the idle state, receive paging by a second mobility management entity. The first mobility management entity is configured to manage the first base station and the first gateway.

The handover control unit 503 is further configured to respond to the paging by the second mobility management entity.

Optionally, the transceiving unit 502 is further configured to receive the downlink data.

When the user equipment provided in this example useful for understanding the present invention is handed over from a first gateway to a second gateway, the user equipment obtains an IP address, and establishes, by using an MPTCP technology, a second MPTCP substream to a communication peer end by using a second IP address. Before the second MPTCP substream is established, the user equipment communicates with the communication peer end by using a first MPTCP substream. After the second MPTCP substream is established, the first MPTCP substream is canceled. In this way, normal communication between user equipment and a base station is ensured, and continuity of a service between the user equipment and a communication peer end is ensured.

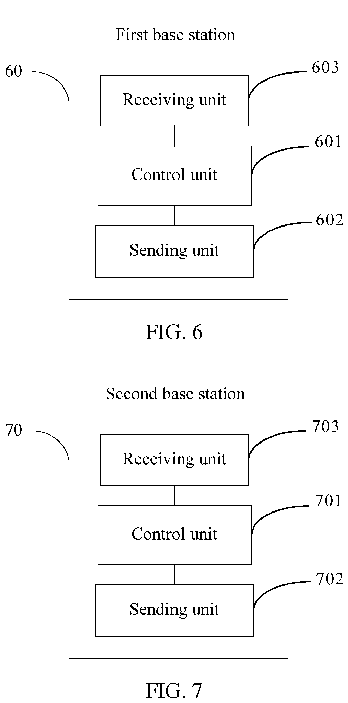

An example useful for understanding the present invention provides another first base station 60. Referring to FIG. 6, the first base station 60 includes a control unit 601, a sending unit 602, and a receiving unit 603.

The control unit 601 is configured to: when user equipment is handed over from the first base station 60 to a second base station, and before a second Multi-Path Transmission Control Protocol MPTCP substream is established, generate an establishment request message for a data forwarding tunnel. The second MPTCP substream is an MPTCP substream established by the user equipment to a communication peer end by using a second Internet Protocol IP address. The second IP address is an IP address allocated by a second gateway to the user equipment. The second gateway is connected to the second base station. The data forwarding tunnel is a data forwarding channel between the first base station 60 and the second base station. The data forwarding tunnel includes a downlink data forwarding tunnel or an uplink data forwarding tunnel, or the data forwarding tunnel includes a downlink data forwarding tunnel and an uplink data forwarding tunnel. The data forwarding channel is configured to transmit data of a first MPTCP substream. The first MPTCP substream is an MPTCP substream established, by using a first IP address, by the user equipment to the communication peer end before the user equipment is handed over from the first base station 60 to the second base station. The first IP address is an IP address allocated by a first gateway to the user equipment. The first gateway is connected to the first base station 60.

The sending unit 602 is configured to send, to the second base station, the establishment request message for the data forwarding tunnel.

The receiving unit 603 is configured to receive an establishment acknowledgement message sent by the second base station for the data forwarding tunnel.

The receiving unit 603 is further configured to receive a deletion request message sent by the second base station for the data forwarding tunnel.

The control unit 601 is further configured to generate a deletion acknowledgement message for the data forwarding tunnel.

The sending unit 602 is further configured to send, to the second base station, a deletion acknowledgement message for the data forwarding tunnel.

The control unit 601 is further configured to: release the data forwarding tunnel, and generate a first IP release indication message.

The sending unit 602 is further configured to send the first IP release indication message to the first gateway.

Optionally, the receiving unit 603 is further configured to receive a second gateway identifier sent by the user equipment.

The control unit 601 is further configured to: determine, according to the second gateway identifier, whether the second gateway and the first gateway are a same gateway, and when the second gateway and the first gateway are not a same gateway, generate a determining indication message. The determining indication message is used to indicate that the second gateway and the first gateway are not a same gateway.

The sending unit 602 is further configured to send the determining indication message to the user equipment, so that the user equipment sends a request message for obtaining an IP address to the second gateway, and receives the second IP address sent by the second gateway.

When user equipment is handed over from a first gateway to a second gateway, the first base station provided in this example useful for understanding the present invention determines that the first gateway and the second gateway are not a same gateway, and before a second MPTCP substream is established, establishes a data forwarding tunnel to a second base station, for transmitting data of a first MPTCP substream, thereby ensuring normal communication between user equipment and a base station, and also ensuring continuity of a service between the user equipment and a communication peer end.

An example useful for understanding the present invention provides another second base station 70, including a control unit 701, a sending unit 702, and a receiving unit 703.

The receiving unit 703 is configured to: when user equipment is handed over from a first base station to the second base station 70, and before a second Multi-Path Transmission Control Protocol MPTCP substream is established, receive an establishment request message sent by the first base station for a data forwarding tunnel. The second MPTCP substream is an MPTCP substream established by the user equipment to a communication peer end by using a second Internet Protocol IP address. The second IP address is an IP address allocated by a second gateway to the user equipment. The second gateway is connected to the second base station 70. The data forwarding tunnel is a data forwarding channel between the first base station and the second base station 70. The data forwarding tunnel includes a downlink data forwarding tunnel or an uplink data forwarding tunnel, or the data forwarding tunnel includes a downlink data forwarding tunnel and an uplink data forwarding tunnel. The data forwarding channel is configured to transmit data of a first MPTCP substream. The first MPTCP substream is an MPTCP substream established, by using a first IP address, by the user equipment to the communication peer end before the user equipment is handed over from the first base station to the second base station 70. The first IP address is an IP address allocated by a first gateway to the user equipment. The first gateway is connected to the first base station.

The control unit 701 is configured to generate an establishment acknowledgement message for the data forwarding tunnel.

The sending unit 702 is configured to send, to the first base station, the establishment acknowledgement message for the data forwarding tunnel.

The control unit 701 is further configured to generate a deletion request message for the data forwarding tunnel after the first MPTCP substream is canceled.

The sending unit 702 is further configured to send, to the first base station, the deletion request message for the data forwarding tunnel.

The receiving unit 703 is further configured to receive a deletion acknowledgement message sent by the first base station for the data forwarding tunnel.

The control unit 701 is further configured to release the data forwarding tunnel.

When user equipment is handed over from a first gateway to a second gateway, and before a second MPTCP substream is established, the second base station provided in this example useful for understanding the present invention establishes a data forwarding tunnel to a first base station, for transmitting data of a first MPTCP substream, thereby ensuring normal communication between user equipment and a base station, and also ensuring continuity of a service between the user equipment and a communication peer end.

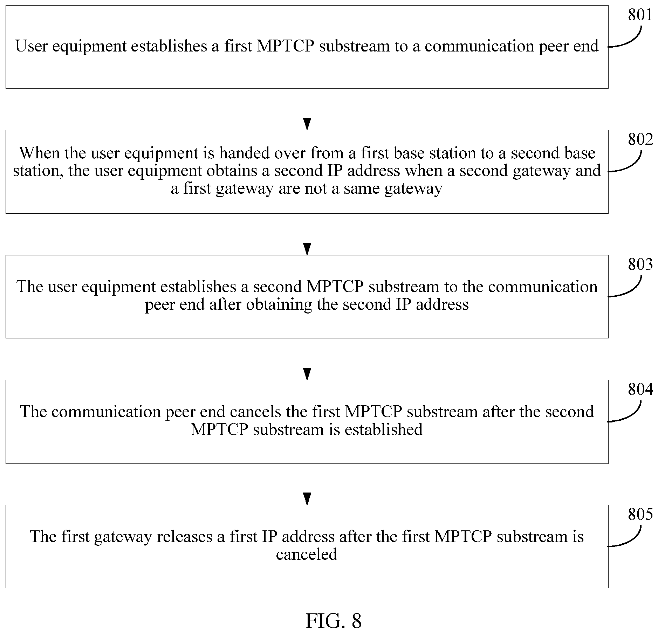

Based on the example corresponding to FIG. 1, an embodiment of the present invention provides a mobility management method, applied to a mobility management system in a cellular network. The mobility management system includes: user equipment, a first base station, a second base station, a first gateway, a second gateway, and a communication peer end. The first base station is connected to the first gateway. The second base station is connected to the second gateway. When the user equipment establishes a TCP (Transmission Control Protocol the Transmission Control Protocol) connection to a communication peer end by using the first gateway, the first gateway allocates an IP address to the user equipment. The IP address allocated by the first gateway to the user equipment is a first IP address. When user equipment is handed over from the first base station to the second base station, the second gateway does not manage the IP address allocated by the first gateway, and the user equipment cannot use the IP address allocated by the first gateway to establish a TCP connection to the communication peer end by using the second gateway. Therefore, the second gateway allocates a new IP address to the user equipment, so that the user equipment establishes a TCP connection to the communication peer end by using the new IP address. The new IP address allocated by the second gateway to the user equipment is a second IP address. The TCP connection established by the user equipment to the communication peer end by using the first IP address is a first substream. The TCP connection established by the user equipment to the communication peer end by using the second IP address is a second substream. In this embodiment, as an example, the mobility management method is described by using an application scenario in which an MPTCP substream is established by using an MPTCP (Multi-Path Transmission Control Protocol, Multi-Path Transmission Control Protocol) technology. Certainly, the mobility management method provided in the present invention is also applicable to an application scenario in which a substream is established by using another technological means. For example, a substream is established by using an MPRTP (Multi-Path Real-time Transport Protocol, Real-Time Transport Protocol) technology. A specific technological means for establishing a substream is not limited in the present invention. Referring to FIG. 8, the mobility management method provided in this embodiment of the present invention includes the following steps.

801. User equipment establishes a first substream to a communication peer end.

Optionally, the first substream may be a first MPTCP (Multi-Path Transmission Control Protocol, Multi-Path Transmission Control Protocol) substream. The first MPTCP substream is an MPTCP substream established by the user equipment to the communication peer end by using a first Internet Protocol IP address. The first IP (Internet Protocol, Internet Protocol) address is an IP address allocated by a first gateway to the user equipment. In an MPTCP technology, an MPTCP layer is added between a socket (socket) of a TCP (Transmission Control Protocol, Transmission Control Protocol)/IP (Internet Protocol, Internet Protocol) protocol stack architecture and a TCP layer, and the MPTCP layer is responsible for managing multiple TCP submodules. Two parties in communication may use different IP address pairs, and establish TCP substream connections. Each TCP substream is an MPTCP substream.

Optionally, the mobility management method provided in the present invention is described by using an LTE (Long Term Evolution, Long Term Evolution) wireless cellular network as an example. The user equipment and the communication peer end may be user terminals supporting the MPTCP technology, servers, or an MPTCP proxy and a server. The first gateway and a second gateway are distributed local gateways. After connecting to a first base station, the user equipment obtains a first IP address from the first gateway, and uses the first IP address to establish a first MPTCP substream to the communication peer end by using the MPTCP technology.

Specifically, optionally, there may be two manners for the user equipment to obtain a first IP address. In first manner, the user equipment sends a DHCP (Dynamic Host Configuration Protocol, Dynamic Host Configuration Protocol) message to the first gateway, to request an IP address from the first gateway. The first gateway sends a first IP address to the user equipment by using the DHCP message. In a second manner, the user equipment sends a NAS (Non Access Stratum, non-access stratum) message to a first mobility management entity, to request an IP address. The first mobility management entity sends, to the user equipment by using the NAS message, a first IP address allocated by the first gateway to the user equipment. After obtaining the first IP address, the user equipment establishes a first MPTCP substream to the communication peer end by using the MPTCP technology. Specifically, the user equipment sends, to the communication peer end, a request for establishing a first MPTCP substream. After receiving the request for establishing a first MPTCP substream, the communication peer end returns an acknowledgement message to the user equipment. After receiving the acknowledgement message, the user equipment sends, to a communications terminal, an establishment acknowledgement message for the first MPTCP substream. In this way, the first MPTCP substream is established.

802. When the user equipment is handed over from a first base station to a second base station, the user equipment obtains a second IP address when a second gateway and a first gateway are not a same gateway.

The second IP address is an IP address allocated by the second gateway to the user equipment. If the second gateway and the first gateway are not a same gateway, in a process in which the user equipment is handed over from the first base station to the second base station, the user equipment needs to obtain a new IP address from the second gateway. After the handover is completed, the user equipment communicates with the communication peer end by using the second IP address allocated by the second gateway.

In a specific application scenario, the user equipment is in an idle state before being handed over from the first base station to the second base station. Optionally, when the user equipment in the idle state moves from the first base station to the second base station, there may be two manners of obtaining the second IP address.

In a first manner of obtaining the second IP address, when the user equipment is connected to the first base station, a first gateway identifier sent by the first base station is received. The first gateway identifier is used to indicate the first gateway. When the user equipment in the idle state moves from the first base station to the second base station and is connected to the second base station, a second gateway identifier sent by the second base station is received. The second gateway identifier is used to indicate the second gateway. The user equipment performs determining on the second gateway identifier and the first gateway identifier. If the second gateway identifier is different from the first gateway identifier, the user equipment sends a request message for obtaining an IP address to the second gateway. The second gateway determines, according to a context record, whether an IP address has been allocated to the user equipment. If an IP address has been allocated to the user equipment, the request of the user equipment for obtaining a new IP address is rejected, and the user equipment is instructed to use the IP address that has been allocated by the second gateway to the user equipment. If the second gateway does not allocate any IP address to the user equipment, the second gateway sends the second IP address to the user equipment. The user equipment receives the second IP address sent by the second gateway. In this way, a process of obtaining the second IP address is completed.

Optionally, the first base station and the second base station may send respective gateway identifiers to the user equipment by means of broadcast. The gateway identifier may be a local network (local network) ID, or the gateway identifier may be a local gateway (local gateway) ID. The request message for obtaining an IP address may be a DHCP request.

In a second manner of obtaining the second IP address, when the user equipment in the idle state moves from the first base station to the second base station, the user equipment sends a location update (TAU, Tracking Area Update) request message to a second mobility management entity, and sends the first IP address or the first gateway identifier to the second mobility management entity. The second mobility management entity determines whether the first IP address is an IP address allocated by the second gateway to the user equipment, or whether the first gateway identifier is the same as the second gateway identifier. If the first IP address is not an IP address allocated by the second gateway to the user equipment, or the first gateway identifier is different from the second gateway identifier, the second mobility management entity determines that the first gateway and the second gateway are not a same gateway.

After determining that the first gateway and the second gateway are not a same gateway, the second mobility management entity determines, according to a context record, whether the second gateway has allocated an IP address to the user equipment. If the second gateway has allocated an IP address to the user equipment, the second mobility management entity rejects the request of the user equipment for obtaining a new IP address, and instructs the user equipment to use the IP address that has been allocated by the second gateway to the user equipment. If the second gateway does not allocate any IP address to the user equipment, the second mobility management entity applies to the second gateway for allocating an IP address to the user equipment, and sends a second IP address received from the second gateway to the user equipment. Optionally, the second mobility management entity may send the second IP address to the user equipment by using a NAS message. Further, optionally, the second mobility management entity adds the second IP address to a location update acknowledgement (TAU Accept) message, and sends the message to the user equipment. The user equipment receives the second IP address sent by the second mobility management entity. In this way, the process of obtaining the second IP address is completed. The first gateway and the second gateway may be managed by a same mobility management entity. In this case, the first mobility management entity and the second mobility management entity may be a same mobility management entity.

Optionally, after determining that the second gateway and the first gateway are not a same gateway, the second mobility management entity may also instruct the user equipment to request an IP address from the second gateway, to complete the process of obtaining the second IP address.

Optionally, when the first gateway and the second gateway are connected to a same mobility management entity, the first mobility management entity and the second mobility management entity are a same mobility management entity.

803. The user equipment establishes a second substream to the communication peer end after obtaining the second IP address.

A second MPTCP substream is an MPTCP substream established by user equipment to the communication peer end by using the second IP address. In the MPTCP technology, an MPTCP layer is added between a socket (socket) of a TCP (Transmission Control Protocol, Transmission Control Protocol)/IP protocol stack architecture and TCP layer, and the MPTCP layer is responsible for managing multiple TCP submodules, so that the user equipment and the communication peer end can use different IP address pairs, and establish one or more MPTCP substream connections. The user equipment sets an option about the MPTCP in a TCP message sent to the communication peer end, and initiates a request for adding the second MPTCP substream. Specifically, the user equipment sets an MP_CAPABLE (Multipath Capable, multipath capable) identifier, to send a query to the communication peer end for whether a second MPTCP substream can be established. After receiving an MPCAPABLE ACK (Acknowledgement, acknowledgement) message returned by the communication peer end, the user equipment sends, to the communication peer end by using the second IP address, a TCP message in which an MP_JOIN (Join Connection, substream access) flag is set. When the user equipment receives an MPJOIN ACK message sent by the communication peer end, the second MPTCP substream is established.

804. The communication peer end cancels the first substream after the second substream is established.

After the second MPTCP substream is established, the user equipment communicates with the communication peer end by using the second MPTCP substream. Therefore, the first MPTCP substream is canceled.

Optionally, the user equipment may send, to the communication peer end by using the second MPTCP substream, a TCP message carrying a REMOVE_ADDR (Remove Address, remove address) option, and send, to the communication peer end, a request for canceling the first MPTCP substream. The REMOVE ADDR option includes the first IP address.

Alternatively, the user equipment sends, to the communication peer end by using the first MPTCP substream, a TCP message in which a bit F of a DSS (Data Sequence Signal, data sequence signal) identifier is 1. The bit F of the DSS identifier is a bit DATA_FIN. A bit of DATA_FIN being 1 represents that data transmission is completed, and cancellation of the first MPTCP substream is requested.

Alternatively, the user equipment sends, to the communication peer end by using the first MPTCP substream, a TCP message carrying an MP_FASTCLOSE (Multipath Fastclose, multipath fastclose) option, and requests to cancel the first MPTCP substream.

805. The first gateway releases a first IP address after the first substream is canceled.

After the first MPTCP substream is canceled, the user equipment releases the first IP address, and instructs the first gateway to release the first IP address. Specifically, the user equipment may send, to the first gateway by using the first base station or the first mobility management entity, an indication message for releasing the first IP address.

That the user equipment releases the first IP address means that the user equipment no longer occupies the first IP address. That the first gateway releases the first IP address means that the first gateway unbonds the first IP address from the user equipment. After releasing the first IP address, the first gateway may allocate the first IP address to another user equipment.

Optionally, after the first MPTCP substream is canceled, the user equipment releases both an RRC (Radio Resource Control, Radio Resource Control) resource and the first IP address, and enters the idle state.

According to the mobility management method provided in this embodiment of the present invention, a first gateway and a second gateway dynamically allocate an IP address to user equipment. In the prior art, a data-aggregation-type anchor device in a mobile network architecture centrally allocates an IP address to user equipment. Therefore, the anchor device is under huge pressure. Once the anchor device goes wrong, normal operation of an entire service network is affected, and a service of the user equipment is interrupted. According to the mobility management method provided in this embodiment of the present invention, when the user equipment is handed over from the first gateway to the second gateway, the user equipment and a communication peer end establish, by using an MPTCP technology, a second MPTCP substream by using a second IP address. Before the second MPTCP substream is established, the user equipment communicates with the communication peer end by using a first MPTCP substream. After the second MPTCP substream is established, the first MPTCP substream is canceled. In this way, normal communication between user equipment and a base station is ensured, and continuity of a service between the user equipment and a communication peer end is ensured.

Based on the embodiment corresponding to FIG. 8, an embodiment of the present invention provides another mobility management method, applied to a mobility management system in a cellular network. In the embodiment corresponding to FIG. 8, the user equipment in the idle state is handed over from the first base station to the second base station, and after being connected to the second base station, the user equipment obtains the second IP address. In this embodiment, user equipment in an idle state is handed over from a first base station to a second base station, and after being connected to the second base station, the user equipment enters the idle state. The user equipment obtains a second IP address only when the user equipment initiates a service request or when downlink data needs to be sent to the user equipment. Some steps in this embodiment are the same as corresponding steps in the embodiment corresponding to FIG. 8. The same parts are not described in detail herein again. Specific steps are as follows.

901. User equipment establishes a first substream to a communication peer end.

902. When the user equipment is handed over from a first base station to a second base station, the user equipment obtains a second IP address when a second gateway and a first gateway are not a same gateway.

In a specific application scenario, the user equipment is in an idle state before being handed over from the first base station to the second base station. With reference to step 802 in the embodiment corresponding to FIG. 8, when the user equipment in the idle state is handed over from the first base station to the second base station, the user equipment sends a location update request message to a second mobility management entity, and sends a first IP address or a first gateway identifier to the second mobility management entity. The second mobility management entity determines, according to the first IP address or the first gateway identifier, whether the first gateway and the second gateway are a same gateway, and determines whether a new IP address needs to be allocated to the user equipment.

If a new IP address needs to be allocated to the user equipment, the second mobility management entity temporarily does not apply to the user equipment for an IP address, but only sends a location update acknowledgement (TAU Accept) message to the user equipment. After receiving the location update acknowledgement message, the user equipment enters the idle state.

Optionally, after the user equipment enters the idle state, there may be three manners for the user equipment to obtain a second IP address.

In a first manner of obtaining a second IP address, the user equipment sends a service request (service request) to the second base station. The second base station forwards the service request to the second mobility management entity. The second mobility management entity applies, to the second gateway, for an IP address for the user equipment, and sends a second IP address received from the second gateway to the user equipment. The user equipment receives the second IP address, and a process of obtaining the second IP address is completed.

In a second manner of obtaining a second IP address, after receiving downlink data sent by the communication peer end to the user equipment, the first gateway caches the downlink data, and sends a downlink data notification (DDN, Downlink Data Notification) to a first mobility management entity. After receiving the downlink data notification, the first mobility management entity pages (page) the user equipment.

After the user equipment responds to the paging by the first mobility management entity, the first mobility management entity requests, from the second gateway, a new IP address for the user equipment, and sends a second IP address received from the second gateway to the user equipment by using a NAS message. In addition, the first mobility management entity requests, from the first gateway, the downlink data cached by the first gateway, and sends the downlink data received from the first gateway to the user equipment by using a NAS message. Optionally, the first mobility management entity may send both the second IP address and the downlink data to the user equipment.

Alternatively, after the user equipment responds to the paging by the first mobility management entity, the first mobility management entity sends, to the second gateway, a request for a new IP address for the user equipment, and sends a second IP address received from the second gateway to the user equipment by using a NAS message. In addition, the first mobility management entity establishes a downlink data forwarding tunnel, so that the first gateway sends the downlink data to the user equipment by using the downlink data forwarding tunnel. Optionally, the downlink data forwarding tunnel may be a data forwarding tunnel between the first gateway and the second gateway. In this case, the first gateway sends the downlink data to the second gateway by using the downlink data forwarding tunnel. The second gateway sends the downlink data to the user equipment by using the second base station. Alternatively, the downlink data forwarding tunnel may be a data forwarding tunnel between the first gateway and the second base station. In this case, the first gateway sends the downlink data to the second base station by using the data forwarding tunnel. The second base station sends the downlink data to the user equipment.

In a third manner of obtaining a second IP address, after sending a location update acknowledgement message to the user equipment, the second mobility management entity registers a downlink data notification of the user equipment with a first mobility management entity. After acknowledging the registration by the second mobility management entity, the first mobility management entity sends the downlink data notification of the user equipment to the second mobility management entity if receiving the downlink data notification sent by the first gateway. After receiving the downlink data notification, the second mobility management entity pages the user equipment. The second mobility management entity is configured to manage the second base station and the second gateway. The first mobility management entity is configured to manage the first base station and the first gateway.

After the user equipment responds to the paging by the first mobility management entity, the second mobility management entity requests, from the second gateway, a new IP address for the user equipment, and sends a second IP address received from the second gateway to the user equipment by using a NAS message. In addition, the second mobility management entity requests downlink data from the first gateway by using the first mobility management entity. After receiving the downlink data that is sent by the first gateway by using the first mobility management entity, the second mobility management entity sends the downlink data to the user equipment by using a NAS message. Optionally, the second mobility management entity may send both the second IP address and the downlink data to the user equipment.

Alternatively, after the user equipment responds to the paging by the second mobility management entity, the second mobility management entity requests, from the second gateway, a new IP address for the user equipment, and sends a second IP address received from the second gateway to the user equipment by using a NAS message. In addition, the second mobility management entity establishes a downlink data forwarding tunnel by using the first mobility management entity, so that the first gateway sends the cached downlink data to the user equipment by using the downlink data forwarding tunnel. Optionally, the downlink data forwarding tunnel may be a data forwarding tunnel between the first gateway and the second gateway. In this case, the first gateway sends the downlink data to the second gateway by using the downlink data forwarding tunnel. The second gateway sends the downlink data to the user equipment by using the second base station. Alternatively, the downlink data forwarding tunnel may be a data forwarding tunnel between the first gateway and the second base station. In this case, the first gateway sends the downlink data to the second base station by using the data forwarding tunnel. The second base station sends the downlink data to the user equipment.

903. The user equipment establishes a second substream to the communication peer end after obtaining the second IP address.

904. The communication peer end cancels the first substream after the second substream is established.

With reference to step 804 in the embodiment corresponding to FIG. 8, after a second MPTCP substream is established, the user equipment sends data to the communication peer end by using the second MPTCP substream, and no longer sends data to the communication peer end by using a first MPTCP substream. Therefore, the first MPTCP substream is canceled.

905. The first gateway releases a first IP address after the first substream is canceled.

After the first MPTCP substream is canceled, the user equipment indicates, to the first mobility management entity, that the first MPTCP substream has been canceled. After forwarding the downlink data to the user equipment, if the first mobility management entity does not receive, after a preset timer times out, a new downlink data notification sent by the user equipment, the first mobility management entity instructs the first gateway to release a resource, such as the first IP address, the downlink data forwarding tunnel, or a context (context).

According to the mobility management method provided in this embodiment of the present invention, a first gateway and a second gateway dynamically allocate an IP address to user equipment. In the prior art, a data-aggregation-type anchor device in a mobile network architecture centrally allocates an IP address to user equipment. Therefore, the anchor device is under huge pressure. Once the anchor device goes wrong, normal operation of an entire service network is affected, and a service of the user equipment is interrupted. According to the mobility management method provided in this embodiment of the present invention, when the user equipment is handed over from the first gateway to the second gateway, the user equipment and a communication peer end establish, by using an MPTCP technology, a second MPTCP substream by using a second IP address. Before the second MPTCP substream is established, the user equipment communicates with the communication peer end by using a first MPTCP substream, and downlink data of the user equipment is transmitted by using a downlink data forwarding tunnel. After the second MPTCP substream is established, the first MPTCP substream is canceled. In this way, normal communication between user equipment and a base station is ensured, and continuity of a service between the user equipment and a communication peer end is ensured.

Based on the embodiment corresponding to FIG. 8, an embodiment of the present invention provides still another mobility management method, applied to a mobility management system in a cellular network. In the embodiment corresponding to FIG. 8, the user equipment in the idle state is handed over from the first base station to the second base station, and after being connected to the second base station, the user equipment obtains the second IP address. In this embodiment, before being handed over from a first base station to a second base station, user equipment is communicating with a communication peer end by using a first MPTCP substream. When the user equipment is handed over from the first base station to the second base station in the process in which the user equipment is communicating with the communication peer end, continuity of a service of the user equipment needs to be ensured. Some steps in this embodiment are the same as corresponding steps in the embodiment corresponding to FIG. 8. The same parts are not described in detail herein again. Specific steps are as follows.

1001. User equipment establishes a first substream to a communication peer end.

1002. When the user equipment is handed over from a first base station to a second base station, the user equipment obtains a second IP address when a second gateway and a first gateway are not a same gateway.

In a specific application scenario, the user equipment is handed over from the first base station to the second base station in a process in which the user equipment communicates with the communication peer end, and the second gateway and the first gateway are not a same gateway. In this case, a data forwarding tunnel is established. When obtaining the second IP address, the user equipment continues to maintain the communication with the communication peer end by using the data forwarding tunnel. That is, data of a first MPTCP substream is transmitted by using the data forwarding tunnel. In this way, a problem of service interruption in a handover process is avoided.

The data forwarding tunnel may include either of a downlink data forwarding tunnel and an uplink data forwarding tunnel, or include both a downlink data forwarding tunnel and an uplink data forwarding tunnel. Herein, a process of establishing the data forwarding tunnel and a process of transmitting the data of the first MPTCP substream by using the data forwarding tunnel are described by using a case in which the data forwarding tunnel includes the downlink data forwarding tunnel and the uplink data forwarding tunnel as an example.

Optionally, two manners of establishing the data forwarding tunnel are provided in this embodiment.

In a first manner of establishing the data forwarding tunnel, the data forwarding tunnel is established by means of X2 interface handover. Specifically, the first base station sends an IP address and a TEID (Tunnel End ID, tunnel end identifier) of the uplink data forwarding tunnel to the second base station by using a Handover Request (handover request) message. After receiving the handover request message, the second base station sends an IP address and a TEID of the downlink data forwarding tunnel to the first base station by using a handover request Ack (handover request acknowledgement) message. In this way, the data forwarding tunnel is established.

In a second manner of establishing the data forwarding tunnel, the data forwarding tunnel is established by means of S1 interface handover. Specifically, the first base station sends an IP address and a TEID of the uplink data forwarding tunnel to a first mobility management entity by using a handover required (handover required) message. The first mobility management entity forwards the handover required message to a second mobility management entity. The second mobility management entity sends the IP address and the TEID of the uplink data forwarding tunnel to the second base station by using a Handover Request message. After receiving the Handover Request message, the second base station returns a Handover Request Ack message to the first base station. In this way, the data forwarding tunnel is established.

After the data forwarding tunnel is established, the user equipment transmits the data of the first MPTCP substream to the communication peer end by using the data forwarding tunnel. The data of the first MPTCP substream includes downlink data of the first MPTCP substream and uplink data of the first MPTCP substream. The downlink data of the first MPTCP substream is data whose target address is a first IP address. The uplink data of the first MPTCP substream is data sent by the user equipment to the communication peer end.

For the downlink data of the first MPTCP substream, after receiving the downlink data of the first MPTCP substream, the first base station sends the downlink data of the first MPTCP substream to the second base station by using the data forwarding tunnel. The second base station sends the downlink data of the first MPTCP substream to the user equipment.

For the uplink data of the first MPTCP substream, after obtaining the second IP address, the second base station sends a data packet whose source address is not the second IP address as an uplink data packet of the first MPTCP substream to the first base station by using the data forwarding tunnel. The first base station sends the uplink data packet to the communication peer end. Optionally, with reference to step 802 in the embodiment corresponding to FIG. 8, this embodiment provides two manners of obtaining the second IP address by the second base station, respectively applied to a scenario in which the user equipment obtains the second IP address by using a DHCP message, and a scenario in which the second mobility management entity requests the second gateway to allocate an IP address to the user equipment.

In the scenario in which the user equipment obtains the second IP address by using a DHCP message, the user equipment determines, by receiving a first gateway identifier and a second gateway identifier, that the first gateway and the second gateway are not a same gateway, and obtains the second IP address by requesting a new IP address from the second gateway. Alternatively, the user equipment sends a second gateway identifier to the first base station. The first base station performs determining on the second gateway identifier and a first gateway identifier. If the second gateway identifier is different from the first gateway identifier, the first base station sends a determining indication message to the user equipment. The determining indication message is used to indicate that the second gateway and the first gateway are not a same gateway. After receiving the determining indication message, the user equipment obtains the second IP address by requesting a new IP address from the second gateway.

After obtaining the second IP address, the user equipment sends the second IP address to the second base station by using an RRC message, or the user equipment sends the second IP address to the second mobility management entity by using a NAS message. The second mobility management entity sends the second IP address to the second base station by using an S1 message. In this way, a process of obtaining the second IP address by the user equipment and the second base station is completed. The second base station sends, to the first base station by using the data forwarding tunnel, a data packet whose source address is the first IP address and that is sent by the user equipment. The first base station sends the data packet to the communication peer end.

In the scenario in which the second mobility management entity requests the second gateway to allocate an IP address to the user equipment, the user equipment sends the first IP address or a first gateway identifier to the second mobility management entity. After the second mobility management entity determines that the first gateway and the second gateway are not a same gateway, the second mobility management entity then requests, from the second gateway, a new IP address for the user equipment, sends the second IP address received from the second gateway to the user equipment by using a NAS message, and sends the second IP address to the second base station by using an S1 message. In this way, a process of obtaining the second IP address by the user equipment and the second base station is completed. The second base station sends, to the first base station by using the data forwarding tunnel, a data packet whose source address is the first IP address and that is sent by the user equipment. The first base station sends the data packet to the communication peer end.

Alternatively, in the scenario in which the second mobility management entity requests the second gateway to allocate an IP address to the user equipment, the user equipment sends the first IP address or a first gateway identifier to the second mobility management entity. After the second mobility management entity determines that the first gateway and the second gateway are not a same gateway, the second mobility management entity then requests, from the second gateway, a new IP address for the user equipment. When sending the second IP address to the second mobility management entity, the second gateway requests, by using a bearer creat request (bear create request) message, the second mobility management entity to create a new bearer between the user equipment and the second base station. After the new bearer is created, the second mobility management entity binds the newly created bearer to the second IP address, and sends both the bearer and the second IP address to the user equipment by using a NAS message. In this way, a process of obtaining the second IP address by the user equipment is completed. When sending the uplink data, the user equipment sends a data packet whose source address is the second IP address by using a newly created bearer, and sends a data packet whose source address is the first IP address by using an existing bearer. The second base station sends, to the first base station by using the data forwarding tunnel, the data packet that is sent by the user equipment by using the existing bearer. The first base station sends the data packet to the communication peer end.

1003. The user equipment establishes a second substream to the communication peer end after obtaining the second IP address.

1004. The communication peer end cancels the first substream after the second substream is established.

With reference to step 804 in the embodiment corresponding to FIG. 8, after a second MPTCP substream is established, the user equipment sends data to the communication peer end by using the second MPTCP substream, and no longer sends data to the communication peer end by using the first MPTCP substream. Therefore, the first MPTCP substream is canceled.

1005. The first gateway releases a first IP address after the first substream is canceled.

After the first MPTCP substream is canceled, the user equipment instructs, by using the first mobility management entity, the first gateway to release the first IP address. In addition, the user equipment instructs the second base station to delete the data forwarding tunnel.

Corresponding to the two manners of establishing the data forwarding tunnel, there are two processes of deleting the data forwarding tunnel.

Specifically, in a scenario in which the data forwarding tunnel is established by means of X2 interface handover, the user equipment indicates, to the second base station by using an RRC message, that the first MPTCP substream has been canceled, or the user equipment indicates, to the second mobility management entity by using a NAS message, that the first MPTCP substream has been canceled, and the second mobility management entity indicates, to the second base station, that the first MPTCP substream has been canceled. After the second base station receives an indication indicating that the first MPTCP substream has been canceled, the first base station sends a request message for deleting the data forwarding tunnel. After receiving the request message for deleting the data forwarding tunnel, the first base station returns, to the second base station, an acknowledgement message for deleting the data forwarding tunnel. The first base station and the second base station release the data forwarding tunnel. The first base station deletes context (context) and access network resources of the user equipment.

Alternatively, in a scenario in which the data forwarding tunnel is established by means of S 1 interface handover, the user equipment indicates, to the second base station by using an RRC message, that the first MPTCP substream has been canceled, or the user equipment indicates, to the second mobility management entity by using a NAS message, that the first MPTCP substream has been canceled, and the second mobility management entity indicates, to the second base station, that the first MPTCP substream has been canceled. After receiving an indication indicating that the first MPTCP substream has been canceled, the second base station sends an indication message to the first mobility management entity by using the second mobility management entity. The second mobility management entity instructs the second gateway to release the data forwarding tunnel. The first mobility management entity instructs the first gateway and the first base station to release the data forwarding tunnel. The first base station deletes both context and access network resources of the user equipment.

Based on the mobility management system provided in the embodiments of the present invention, an embodiment of the present invention further provides a method for charging user equipment. When the user equipment communicates with a communication peer end by using a first substream, a first gateway charges the user equipment. When the user equipment communicates with the communication peer end by using a second substream, a second gateway charges the user equipment. In this embodiment, for example, description is provided by using an application scenario in which the first gateway charges the user equipment.

In an application scenario in which a charging rule function (PCRF, Policy and Charging Rules Function) and an online charging system (OCS, Online Charging System) are used, the first gateway obtains a charging rule of the user equipment and an available credit of the user equipment, performs deduction on the available credit of the user equipment according to the charging rule of the user equipment, and then sends an available credit balance of the user equipment to the online charging system. The available credit of the user equipment is an available credit of an account of the user equipment. The available credit may be a credit (credit) or quota (quota) of the user equipment.

Specifically, optionally, when the user equipment is connected to the first gateway, the first gateway requests, from a first mobility management entity, the charging rule of the user equipment and the available credit of the user equipment. The first mobility management entity obtains the charging rule of the user equipment from the policy and charging rules function, and sends the charging rule of the user equipment to the first gateway. The first mobility management entity obtains an available credit of the user equipment from the online charging system, and sends the available credit of the user equipment to the first gateway. The first gateway performs deduction on the available credit of the user equipment according to the charging rule of the user equipment. If the available credit of the user equipment is completed deducted, the first gateway re-requests, from the first mobility management entity, an available credit of the user equipment. After the first substream is canceled, the first gateway returns the available credit balance of the user equipment to the online charging system by using a mobility management entity.

In an application scenario in which a charging rule function and an off-line charging system (OFCS, Off-line Charging System) are used, the first gateway sends a call detail record (CDR, Call Detail Record) of the user equipment on the first gateway to a first mobility management entity. The first mobility management entity sends the call detail record of the user equipment on the first gateway to the off-line charging system. Optionally, the first mobility management entity may manage multiple gateways. The first gateway may be one or more of the gateways managed by the first mobility management entity.

According to the mobility management method provided in this embodiment of the present invention, a first gateway and a second gateway dynamically allocate an IP address to user equipment. In the prior art, a data-aggregation-type anchor device in a mobile network architecture centrally allocates an IP address to user equipment. Therefore, the anchor device is under huge pressure. Once the anchor device goes wrong, normal operation of an entire service network is affected, and a service of the user equipment is interrupted. According to the mobility management method provided in this embodiment of the present invention, when the user equipment is handed over from the first gateway to the second gateway, the user equipment and a communication peer end establish, by using an MPTCP technology, a second MPTCP substream by using a second IP address. Before the second MPTCP substream is established, the user equipment communicates with the communication peer end by using a first MPTCP substream, and a downlink data forwarding tunnel is used to receive downlink data and send uplink data. After the second MPTCP substream is established, the first MPTCP substream is canceled. In this way, normal communication between user equipment and a base station is ensured, and continuity of a service between the user equipment and a communication peer end is ensured.

With descriptions of the foregoing embodiments and examples, a person skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following is taken as an example but is not limited: The computer readable medium may include a RAM (Random Access Memory, random access memory), a ROM (Read-Only Memory, read-only memory), an EEPROM (Electrically Erasable Programmable Read-Only Memory, electrically erasable programmable read-only memory), a CD-ROM (Compact Disc Read-Only Memory, compact disc read-only memory) or other optical disk storage, a disk storage medium or other disk storage, or any other medium that can be used to carry or store expected program code in a command or data structure form and can be accessed by a computer. In addition, any connection may be appropriately defined as a computer-readable medium. For example, if software is transmitted from a website, a server or another remote source by using a coaxial cable, an optical fiber/cable, a twisted pair, a DSL (Digital Subscriber Line, digital subscriber line) or wireless technologies such as infrared ray, radio and microwave, the coaxial cable, optical fiber/cable, twisted pair, DSL or wireless technologies such as infrared ray, radio and microwave are included in fixation of a medium to which they belong. For example, a disk and a disc used by the present invention includes a CD (Compact Disc, compact disc), a laser disc, an optical disc, a DVD disc (Digital Versatile Disc, digital versatile disc), a floppy disk and a Blu-ray disc, where the disk generally copies data by a magnetic means, and the disc copies data optically by a laser means. The foregoing combination should also be included in the protection scope of the computer-readable medium.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. User equipment (1001), comprising a processor (2001), a memory (2002), and a bus (2003), wherein the processor (2001) and the memory (2002) are connected to each other by using the bus (2003), wherein
the processor (2001) is configured to establish a first substream to a communication peer end (1006), wherein the first substream is a substream established by the user equipment (1001) to the communication peer end (1006) by using a first Internet Protocol, IP, address, the first IP address is an IP address allocated by a first gateway to the user equipment, and the first gateway (1004) is connected to the user equipment (1001) through a first base station (1002);
the processor (2001) is further configured to obtain a second IP address, wherein the second IP address is an IP address allocated by a second gateway (1005) to the user equipment (1001), and the second gateway (1005) is connected to the user equipment (1001) through a second base station (1003);
the processor is further configured to establish a second substream to the communication peer end (1006), wherein the second substream is a substream established by the user equipment (1001) to the communication peer end (1006) by using the second IP address; and
the processor (2001) is further configured to cancel the first substream after the second substream is established, wherein
the processor (2001) is further configured to transmit data of the first substream to the first base station, the first base station using a data forwarding tunnel, wherein the data forwarding tunnel is a data forwarding channel between the first base station (1002) and the second base station (1003), wherein
the processor (2001) is further configured to: after canceling the first substream, release the first IP address, and generate an indication message for instructing the first gateway (1004) to release the first IP address; and
the user equipment (1001) further comprises a transmitter (2005), configured to send, to the first gateway (1004), the indication message for instructing the first gateway (1004) to release the first IP address.

2. The user equipment (1001) according to claim 1, wherein the data forwarding tunnel comprises:
a downlink data forwarding tunnel or an uplink data forwarding tunnel; or
a downlink data forwarding tunnel and an uplink data forwarding tunnel.

3. The user equipment (1001) according to claim 1 or 2, wherein
the processor (2001) is further configured to generate an indication message indicating that the first substream has been canceled; and
the user equipment (1001) further comprises a transmitter (2005), configured to send, to the second base station (1003), an indication message indicating that the first substream has been canceled, so that the second base station (1003) deletes the data forwarding tunnel.

4. A mobility management method performed by a user equipment (1001), wherein the user equipment (1001) establishes a first substream to a communication peer end (1006) when the user equipment (1001) is connected to a first base station (1002), wherein the first substream is a substream established by the user equipment (1001) to the communication peer end (1006) by using a first Internet Protocol, IP, address, the first IP address is an IP address allocated by a first gateway (1004) to the user equipment (1001), and the first gateway (1004) is connected to the user equipment (1001) through the first base station (1002);
when the user equipment (1001) is handed over from the first base station (1002) to a second base station (1003), the user equipment (1001) obtains a second IP address when a second gateway (1005) and the first gateway (1004) are not a same gateway, wherein the second IP address is an IP address allocated by the second gateway (1005) to the user equipment (1001), and the second gateway (1005) is connected to the user equipment (1001) through the second base station (1003);
the user equipment (1001) establishes a second substream to the communication peer end (1006), wherein the second substream is a substream established by the user equipment (1001) to the communication peer end (1006) by using the second IP address; and
the user equipment (1001) cancels the first substream after the second substream is established,
wherein that the user equipment (1001) is handed over from the first base station (1002) to the second base station (1003) comprises: the user equipment (1001) is handed over from the first base station (1002) to the second base station (1003) in a process in which the user equipment (1001) is communicating with the communication peer end (1006); and
when the second gateway (1005) and the first gateway (1004) are not a same gateway, the method further comprises:
transmitting, by the user equipment, data of the first substream to the first base station, the first base station using the data forwarding tunnel, wherein the data forwarding tunnel is a data forwarding channel between the first base station (1002) and the second base station (1003), wherein
after the canceling the first substream, the user equipment (1001) releases the first IP address, and instructs the first gateway (1004) to release the first IP address.

5. The method according to claim 4, wherein the data forwarding tunnel comprises:
a downlink data forwarding tunnel or an uplink data forwarding tunnel; or
a downlink data forwarding tunnel and an uplink data forwarding tunnel.

## Patentansprüche

1. Benutzergerät (User Equipment) (1001), das einen Prozessor (2001), einen Speicher (2002) und einen Bus (2003) umfasst, wobei der Prozessor (2001) und der Speicher (2002) mithilfe des Busses (2003) miteinander verbunden sind, wobei
der Prozessor (2001) konfiguriert ist zum Einrichten eines ersten Datenteilstroms zu einem Kommunikations-Peer-Endgerät (1006), wobei der erste Datenteilstrom ein Datenteilstrom ist, der von dem Benutzergerät (1001) zu dem Kommunikations-Peer-Endgerät (1006) eingerichtet wird, indem eine erste Internetprotokolladresse, IP-Adresse, verwendet wird, wobei die erste IP-Adresse eine IP-Adresse ist, die dem Benutzergerät von einem ersten Gateway zugewiesen wird, und wobei das erste Gateway (1004) durch eine erste Basisstation (1002) mit dem Benutzergerät (1001) verbunden ist;
wobei der Prozessor (2001) außerdem konfiguriert ist zum Erhalten einer zweiten IP-Adresse, wobei die zweite IP-Adresse eine IP-Adresse ist, die dem Benutzergerät (1001) von einem zweiten Gateway (1005) zugewiesen wird, und wobei das zweite Gateway (1005) durch eine zweite Basisstation (1003) mit dem Benutzergerät (1001) verbunden ist;
wobei der Prozessor außerdem konfiguriert ist zum Einrichten eines zweiten Datenteilstroms zu dem Kommunikations-Peer-Endgerät (1006), wobei der zweite Datenteilstrom ein Datenteilstrom ist, der von dem Benutzergerät (1001) zu dem Kommunikations-Peer-Endgerät (1006) eingerichtet wird, indem die zweite IP-Adresse verwendet wird; und
wobei der Prozessor (2001) außerdem konfiguriert ist zum Löschen des ersten Datenteilstroms, nachdem der zweite Datenteilstrom eingerichtet wurde, wobei
der Prozessor (2001) außerdem konfiguriert ist zum Übertragen von Daten des ersten Datenteilstroms an die erste Basisstation, wobei die erste Basisstation einen Weiterleitungsdatentunnel verwendet, wobei der Weiterleitungsdatentunnel ein Datenweiterleitungskanal zwischen der ersten Basisstation (1002) und der zweiten Basisstation (1003) ist, wobei
der Prozessor (2001) außerdem konfiguriert ist zum: nach dem Löschen des ersten Datenteilstroms, Freigeben der ersten IP-Adresse; und Erzeugen einer Anzeigenachricht, um das erste Gateway (1004) anzuweisen, die erste IP-Adresse freizugeben; und
wobei das Benutzergerät (1001) außerdem einen Sender (2005) umfasst, der konfiguriert ist zum Senden der Anzeigenachricht an das erste Gateway (1004), um das erste Gateway (1004) anzuweisen, die erste IP-Adresse freizugeben.

2. Benutzergerät (1001) nach Anspruch 1, wobei der Weiterleitungsdatentunnel umfasst:
einen Weiterleitungsdatentunnel für Downlink-Daten oder einen Weiterleitungsdatentunnel für Uplink-Daten; oder
einen Weiterleitungsdatentunnel für Downlink-Daten und einen Weiterleitungsdatentunnel für Uplink-Daten.

3. Benutzergerät (1001) nach Anspruch 1 oder 2, wobei
der Prozessor (2001) außerdem konfiguriert ist zum Erzeugen einer Anzeigenachricht, die anzeigt, dass der erste Datenteilstrom gelöscht wurde; und
wobei das Benutzergerät (1001) außerdem einen Sender (2005) umfasst, der konfiguriert ist zum Senden einer Anzeigenachricht, die anzeigt, dass der erste Datenteilstrom gelöscht wurde, an die zweite Basisstation (1003), sodass die zweite Basisstation (1003) den Weiterleitungsdatentunnel entfernt.

4. Mobilitätsverwaltungsverfahren, das von einem Benutzergerät (1001) ausgeführt wird, wobei
das Benutzergerät (1001) einen ersten Datenteilstrom zu einem Kommunikations-Peer-Endgerät (1006) einrichtet, wenn das Benutzergerät (1001) mit einer ersten Basisstation (1002) verbunden ist, wobei der erste Datenteilstrom ein Datenteilstrom ist, der von dem Benutzergerät (1001) zu dem Kommunikations-Peer-Endgerät (1006) eingerichtet wird, indem eine erste Internetprotokolladresse, IP-Adresse, verwendet wird, wobei die erste IP-Adresse eine IP-Adresse ist, die dem Benutzergerät (1001) von einem ersten Gateway (1004) zugewiesen wird, und wobei das erste Gateway (1004) durch die erste Basisstation (1002) mit dem Benutzergerät (1001) verbunden ist;
wenn das Benutzergerät (1001) von der ersten Basisstation (1002) an eine zweite Basisstation (1003) übergeben wird, das Benutzergerät (1001) eine zweite IP Adresse erhält, wenn ein zweites Gateway (1005) und das erste Gateway (1004) nicht das gleiche Gateway sind, wobei die zweite IP-Adresse eine IP-Adresse ist, die dem Benutzergerät (1001) von dem zweiten Gateway (1005) zugewiesen wird, und wobei das zweite Gateway (1005) durch die zweite Basisstation (1003) mit dem Benutzergerät (1001) verbunden ist;
das Benutzergerät (1001) einen zweiten Datenteilstrom zu dem Kommunikations-Peer-Endgerät (1006) einrichtet, wobei der zweite Datenteilstrom ein Datenteilstrom ist, der von dem Benutzergerät (1001) zu dem Kommunikations-Peer-Endgerät (1006) eingerichtet wird, indem die zweite IP-Adresse verwendet wird; und
das Benutzergerät (1001) den ersten Datenteilstrom löscht, nachdem der zweite Datenteilstrom eingerichtet wurde,
wobei das Übergeben des Benutzergeräts (1001) von der ersten Basisstation (1002) an die zweite Basisstation (1003) umfasst: Übergeben des Benutzergeräts (1001) von der ersten Basisstation (1002) an die zweite Basisstation (1003) in einem Prozess, bei dem das Benutzergerät (1001) mit dem Kommunikations-Peer-Endgerät (1006) kommuniziert; und
wobei, wenn das zweite Gateway (1005) und das erste Gateway (1004) nicht das gleiche Gateway sind, das Verfahren außerdem aufweist:
Übertragen von Daten des ersten Datenteilstroms von dem Benutzergerät an die erste Basisstation, wobei die erste Basisstation den Weiterleitungsdatentunnel verwendet, wobei der Weiterleitungsdatentunnel ein Datenweiterleitungskanal zwischen der ersten Basisstation (1002) und der zweiten Basisstation (1003) ist, wobei das Benutzergerät (1001), nach dem Löschen des ersten Datenteilstroms, die erste IP-Adresse freigibt und das erste Gateway (1004) anweist, die erste IP-Adresse freizugeben.

5. Verfahren nach Anspruch 4, wobei der Weiterleitungsdatentunnel umfasst:
einen Weiterleitungsdatentunnel für Downlink-Daten oder einen Weiterleitungsdatentunnel für Uplink-Daten; oder
einen Weiterleitungsdatentunnel für Downlink-Daten und einen Weiterleitungsdatentunnel für Uplink-Daten.

## Revendications

1. Équipement d'utilisateur (1001), comprenant un processeur (2001), une mémoire (2002) et un bus (2003), le processeur (2001) et la mémoire (2002) étant mutuellement connectés au moyen du bus (2003),
le processeur (2001) étant configuré pour établir un premier sous-flux avec une extrémité homologue de communication (1006), le premier sous-flux étant un sous-flux établi par l'équipement d'utilisateur (1001) avec l'extrémité homologue de communication (1006) au moyen d'une première adresse sur protocole Internet (IP), la première adresse IP étant une adresse IP attribuée par une première passerelle à l'équipement d'utilisateur, et la première passerelle (1004) étant connectée à l'équipement d'utilisateur (1001) par l'intermédiaire d'une première station de base (1002) ;
le processeur (2001) étant en outre configuré pour obtenir une seconde adresse IP, la seconde adresse IP étant une adresse IP attribuée par une seconde passerelle (1005) à l'équipement d'utilisateur (1001), et la seconde passerelle (1005) étant connectée à l'équipement d'utilisateur (1001) par l'intermédiaire d'une seconde station de base (1003) ;
le processeur étant en outre configuré pour établir un second sous-flux avec l'extrémité homologue de communication (1006), le second sous-flux étant un sous-flux établi par l'équipement d'utilisateur (1001) avec l'extrémité homologue de communication (1006) au moyen de la seconde adresse IP ; et
le processeur (2001) étant en outre configuré pour annuler le premier sous-flux après l'établissement du second sous-flux,
le processeur (2001) étant en outre configuré pour émettre des données du premier sous-flux vers la première station de base, la première station de base utilisant un tunnel de transfert de données, le tunnel de transfert de données étant un canal de transfert de données entre la première station de base (1002) et la seconde station de base (1003),
le processeur (2001) étant en outre configuré pour : après l'annulation du premier sous-flux, libérer la première adresse IP et générer un message d'indication pour donner l'instruction à la première passerelle (1004) de libérer la première adresse IP ; et
l'équipement d'utilisateur (1001) comprenant en outre un émetteur (2005), configuré pour envoyer, à la première passerelle (1004), le message d'indication pour donner l'instruction à la première passerelle (1004) de libérer la première adresse IP.

2. Équipement d'utilisateur (1001) selon la revendication 1, dans lequel le tunnel de transfert de données comprend :
un tunnel de transfert de données en liaison descendante ou un tunnel de transfert de données en liaison montante ; ou
un tunnel de transfert de données en liaison descendante et un tunnel de transfert de données en liaison montante.

3. Équipement d'utilisateur (1001) selon la revendication 1 ou 2, dans lequel :
le processeur (2001) est en outre configuré pour générer un message d'indication indiquant que le premier sous-flux a été annulé ; et
l'équipement d'utilisateur (1001) comprend en outre un émetteur (2005) configuré pour envoyer, à la seconde station de base (1003), un message d'indication indiquant que le premier sous-flux a été annulé, de sorte que la seconde station de base (1003) supprime le tunnel de transfert de données.

4. Procédé de gestion de mobilité réalisé par un équipement d'utilisateur (1001), dans lequel :
l'équipement d'utilisateur (1001) établit un premier sous-flux avec une extrémité homologue de communication (1006) quand l'équipement d'utilisateur (1001) est connecté à une première station de base (1002), le premier sous-flux étant un sous-flux établi par l'équipement d'utilisateur (1001) avec l'extrémité homologue de communication (1006) au moyen d'une première adresse sur protocole Internet (IP), la première adresse IP étant une adresse IP attribuée par une première passerelle (1004) à l'équipement d'utilisateur (1001), et la première passerelle (1004) étant connectée à l'équipement d'utilisateur (1001) par l'intermédiaire de la première station de base (1002) ;
quand l'équipement d'utilisateur (1001) est transféré de la première station de base (1002) à une seconde station de base (1003), l'équipement d'utilisateur (1001) obtient une seconde adresse IP quand une seconde passerelle (1005) et la première passerelle (1004) ne sont pas une même passerelle, la seconde adresse IP étant une adresse IP attribuée par la seconde passerelle (1005) à l'équipement d'utilisateur (1001), et la seconde passerelle (1005) étant connectée à l'équipement d'utilisateur (1001) par l'intermédiaire de la seconde station de base (1003) ;
l'équipement d'utilisateur (1001) établit un second sous-flux avec l'extrémité homologue de communication (1006), le second sous-flux étant un sous-flux établi par l'équipement d'utilisateur (1001) avec l'extrémité homologue de communication (1006) au moyen de la seconde adresse IP ; et
l'équipement d'utilisateur (1001) annule le premier sous-flux après l'établissement du second sous-flux,
le transfert de l'équipement d'utilisateur (1001) de la première station de base (1002) à la seconde station de base (1003) consistant à : transférer l'équipement d'utilisateur (1001) de la première station de base (1002) à la seconde station de base (1003) dans un processus au cours duquel l'équipement d'utilisateur (1001) communique avec l'extrémité homologue de communication (1006) ; et
quand la seconde passerelle (1005) et la première passerelle (1004) ne sont pas une même passerelle, le procédé consistant en outre à :
émettre, par l'équipement d'utilisateur, des données du premier sous-flux vers la première station de base, la première station de base utilisant le tunnel de transfert de données, le tunnel de transfert de données étant un canal de transfert de données entre la première station de base (1002) et la seconde station de base (1003),
après l'annulation du premier sous-flux, l'équipement d'utilisateur (1001) libérant la première adresse IP et donnant l'instruction à la première passerelle (1004) de libérer la première adresse IP.

5. Procédé selon la revendication 4, dans lequel le tunnel de transfert de données comprend :
un tunnel de transfert de données en liaison descendante ou un tunnel de transfert de données en liaison montante ; ou
un tunnel de transfert de données en liaison descendante et un tunnel de transfert de données en liaison montante.
